# EUROPEAN PATENT APPLICATION

(11) **EP 4 832 594 A1**
(43) Date of publication of application: **28.10.2026**
(21) Application number: 24923551.6
(22) Date of filing: 20.12.2024
(51) Int. Cl.: H04W 52/02

(54) **COMMUNICATION METHOD, DEVICE AND SYSTEM**

(30) Priority: 08.02.2024 CN 202410178132
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2024/140880
(87) International publication number: WO 2025/167349

(57) **Abstract**

This application relates to the field of communication technologies, and discloses a communication method, a device, and a system, to implement network energy saving in a network access scenario and reduce power consumption in a process in which a UE receives an SSB or an SIB1. The method includes: A network device may indicate to a UE whether one of an SSB or an SIBI1 is sent by the network device based on a request of the UE, that is, whether one of the SSB or the SIB1 is an on-demand (on-demand) signal. Alternatively, the network device may indicate to the UE whether there is the SIB1 after the SSB. If the network device indicates that the SSB or the SIB1 is an on-demand signal or there is no SIB1 after the SSB, the network device does not need to periodically broadcast one of the SSB or the SIB1, thereby reducing power consumption of the network device and implementing network energy saving NES. In addition, this reduces energy consumption of the UE, and helps the UE quickly access the network device.

## Description

This application claims priority to Chinese Patent Application No. 202410178132.7, filed with the China National Intellectual Property Administration on February 8, 2024 and entitled "COMMUNICATION METHOD, DEVICE, AND SYSTEM", which is incorporated herein by reference in its entirety.

### TECHNICAL FIELD

This application relates to the field of communication technologies, and in particular, to a communication method, a device, and a system.

### BACKGROUND

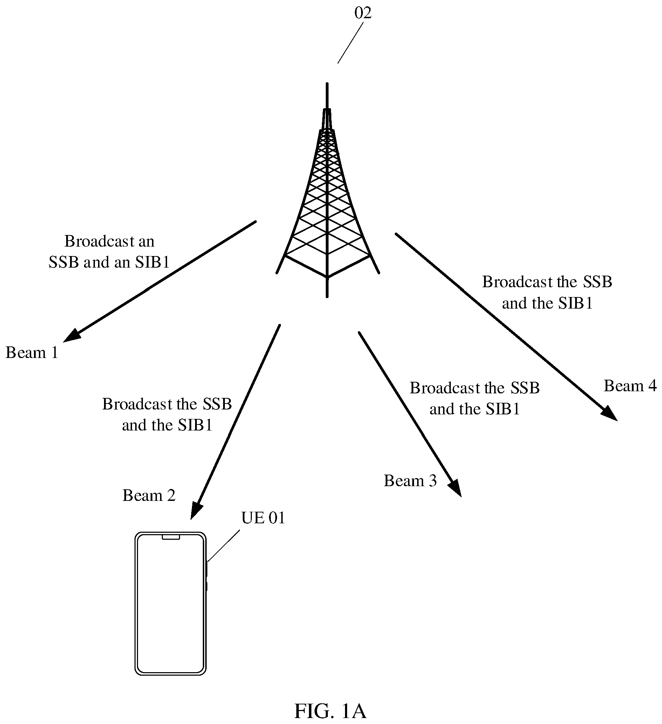

Currently, before accessing a cell, a user equipment (UE) needs to first receive a synchronization signal/physical broadcast channel block (synchronization signal/physical broadcast channel block, SSB), and a system information block 1 (system information block 1, SIB1). As shown in FIG. 1A, a network device 02 (such as a base station) periodically sends a synchronization signal/physical broadcast channel block (synchronization signal/physical broadcast channel block, SSB), and a system information block 1 (system information block1, SIB1) on a plurality of beams (beams). In this case, based on the received SSB and SIB1, a user equipment (user equipment, UE) 01 within signal coverage of the network device 02 (for example, in a cell covered by a signal of the network device 02) can synchronize with the network device in time domain and access the network device.

Usually, a network device periodically broadcasts the SSB and the SIB1 on the plurality of beams, so that the network device continues in a state of broadcasting a signal at high power consumption. As a result, energy consumption of the network device remains at a high level for a long time. Correspondingly, a UE periodically receives the SSB and the SIB1 and decodes the SIB1, resulting in considerable resource consumption during continuous SIB1 decoding before the UE accesses the cell.

### SUMMARY

Embodiments of this application provide a communication method, a device, and a system, to implement network energy saving in a network access scenario and reduce power consumption in a process in which a UE receives an SSB or an SIB1.

According to a first aspect, an embodiment of this application provides a communication method, applied to a user equipment UE. The method includes: receiving a synchronization signal/physical broadcast channel block SSB that is sent by a network device, where the SSB includes first identification information; and determining, based on the first identification information, that a system information block SIB1 is a signal periodically sent by the network device (denoted as an always-on signal), or a signal sent by the network device based on a request of the UE (denoted as an on-demand signal).

If the network device indicates that the SIB1 is an on-demand signal, the network device may send the SIB1 after receiving the request of the UE, but does not actively send the SIB1. In this case, the network device does not need to periodically broadcast the SIB1, thereby reducing power consumption of the network device and implementing network energy saving NES. In addition, when the network device indicates to the UE that the SIB1 is an on-demand signal, the UE receives the SIB1 only when the UE initiates a request to the network device. This can reduce resource consumption caused by the UE receiving a signal, reduce resource consumption caused in a process of decoding the SIB1, and help the UE quickly access the network device.

In a possible implementation of the first aspect, the method further includes: corresponding to the SIB1 being the signal periodically sent by the network device, receiving the SIB1 periodically sent by the network device; or corresponding to the SIB1 being the signal sent by the network device based on the request of the UE, sending a wake-up signal to the network device, and receiving the SIB1 sent by the network device based on the wake-up signal. For example, the network device broadcasts the SIB1 based on a request of wake-up information.

In a possible implementation of the first aspect, the first identification information is a first bit in a master information block MIB of the SSB; and a value of the first bit is a first parameter value, and the SIB1 is the signal sent by the network device based on the request of the UE; or a value of the first bit is a second parameter value, and the SIB1 is the signal periodically sent by the network device. For example, the first parameter value is 1, and the second parameter value is 0.

In a possible implementation of the first aspect, the first bit is a spare bit. It may be understood that spare is an existing bit in the MIB. During actual application, in this application, the existing spare bit may be used, for example, a new name onDemandRmsi may be defined for the spare bit, and the spare bit may be set as the first bit in the MIB, to indicate whether there is the SIB1 after the SSB. In this case, a value of the bit onDemandRmsi in the MIB is a first parameter value (for example, 1), indicating that the SIB1 is an on-demand signal.

In a possible implementation of the first aspect, the first identification information is carried in a resource element RE in which a physical broadcast channel PBCH in the SSB is located; and the RE in which the PBCH is located is a zero-power RE, and the SIB1 is the signal sent by the network device based on the request of the UE; or the RE in which the PBCH is located is not a zero-power RE, and the SIB1 is the signal periodically sent by the network device. It may be understood that REs being zero-power REs usually indicates that these REs are not used to transmit valid data signals. In this case, in this application, whether the SIB1 is an on-demand signal is indicated by using power of the RE of the PBCH in the MIB of the SSB, thereby implementing network energy saving and allowing the UE to quickly access a network.

According to a second aspect, an embodiment of this application provides a communication method, applied to a user equipment UE. The method includes: receiving a synchronization signal/physical broadcast channel block SSB that is sent by a network device, and first configuration information in a master information block MIB of the SSB, where the first configuration information is associated with a first table or a target parameter; and determining, based on the first table or the target parameter, that a system information block SIB1 is a signal periodically sent by the network device or a signal sent by the network device based on a request of the UE. In this case, in this application, whether the SIB1 is the signal sent by the network device based on the request of the UE may be indicated by using the table associated with the configuration information of the MIB of the SSB. This reduces a resource consumed by the network device for broadcasting the SSB and the SIB1, and avoids a network access delay caused by the UE continuously receiving the SSB and the SIB1.

In a possible implementation of the second aspect, corresponding to the SIB1 being the signal periodically sent by the network device, the SIB1 periodically sent by the network device is received; or corresponding to the SIB1 being the signal sent by the network device based on the request of the UE, a wake-up signal is sent to the network device, and the SIB1 sent by the network device based on the wake-up signal is received.

In a possible implementation of the second aspect, the first configuration information is SIB1 configuration information pdcch-ConfigSIB1, and the SIB1 configuration information is used to configure a Type0-PDCCH common search space CSS for decoding the SIB1, and is further used to configure a control resource set CORESET for the Type0-PDCCH CSS. The first table is a table corresponding to the Type0-PDCCH CSS, and four most significant bits of the SIB1 configuration information correspond to an index of a data row in the first table. Alternatively, the first table is a table corresponding to the CORESET, for example, tables from Table 13-11 to Table 13-15 defined in TS38.213, and four least significant bits of the SIB1 configuration information correspond to an index of a data row in the first table.

In a possible implementation of the second aspect, the first table corresponds to a UE that supports network energy saving NES, and the SIB1 is the signal sent by the network device based on the request of the UE; or the first table corresponds to a UE that does not support network energy saving NES, and the SIB1 is the signal periodically sent by the network device. For example, the first table may be a table newly added in a standard (for example, release 19). When the first table is the table corresponding to Type0-PDCCH CSS, the table may be different from Table 13-1 to Table 13-10 defined in TS 38.213.

In a possible implementation of the second aspect, the first table includes a first entry; and a value of the first entry in the data row indexed based on the SIB1 configuration information in the first table is a third parameter value, and the SIB1 is the signal sent by the network device based on the request of the UE; or a value of the first entry in the data row indexed based on the SIB1 configuration information in the first table is a fourth parameter value, and the SIB1 is the signal periodically sent by the network device. In this case, in this application, a column of data may be newly added to a table defined in the standard, and the newly added data may indicate whether the SIB1 is the signal sent by the network device based on the request of the UE. The first entry is an entry in the column of data.

In a possible implementation of the second aspect, the data row indexed based on the SIB1 configuration information in the first table is a reserved (reserved) row, and the SIB1 is the signal sent by the network device based on the request of the UE; or the data row indexed based on the SIB1 configuration information in the first table is not a reserved row, and the SIB1 is the signal periodically sent by the network device.

In a possible implementation of the second aspect, the first configuration information is a subcarrier offset in the MIB of the SSB (ssb-SubcarrierOffset), the subcarrier offset is used to calculate a k_SSB parameter, and the target parameter is the k_SSB parameter; and a value of the k_SSB parameter is a fifth parameter value, and the SIB1 is the signal sent by the network device based on the request of the UE; or a value of the k_SSB parameter is a sixth parameter value, and the SIB1 is the signal periodically sent by the network device. For example, when the first table is Table 13-8 defined in TS 38.213, if indexes determined in the SIB1 configuration information are 7 to 15, the data row indexed based on the SIB1 configuration information in the first table is a reserved row. In this case, an SIB1 after a current SSB is an on-demand signal.

According to a third aspect, an embodiment of this application provides a communication method, applied to a user equipment UE. The method includes: receiving a first signal via a primary cell PCell in which a primary carrier of the UE is located; and determining, based on the first signal, that a synchronization signal/physical broadcast channel block SSB and/or system information SIB1 that are/is sent on at least one secondary cell SCell in which a secondary carrier of the UE is located are/is signals/a signal periodically sent by a network device or signals/a signal sent by the network device based on a request of the UE. In this case, in this application, through signaling in the primary cell in which the primary carrier is located, whether an SSB and an SIB1 of a secondary cell in which the secondary carrier of the UE is located are the signals sent by the network device based on the request of the UE may be indicated, and whether an SSB and/or an SIB1 in each SCell of the at least one SCell are/is on-demand signals/an on-demand signal is specifically indicated. In this way, the network device can reduce resources occupied by sending the SSB and the SIB1 on the secondary cell, thereby facilitating network energy saving. In addition, this reduces resource cells for receiving and decoding the SSB and the SIB1 on the secondary cell of a UE side, and helps quickly access a network.

In a possible implementation of the third aspect, corresponding to the SSB being the signal sent by the network device based on the request of the UE, a first wake-up signal is sent to the network device on the at least one SCell, and the SSB sent by the network device on the at least one SCell based on the first wake-up signal is received; corresponding to the SIB1 being the signal sent by the network device based on the request of the UE, a second wake-up signal is sent to the network device on the at least one SCell, and the SIB1 sent by the network device on the at least one SCell based on the second wake-up signal is received; or corresponding to the SSB and the SIB1 being the signals sent by the network device based on the request of the UE, a third wake-up signal is sent to the network device on the at least one SCell, and the SSB and the SIB1 sent by the network device on the at least one SCell based on the third wake-up signal are received. In this case, the network device may broadcast at least one of the SSB and the SIB1 on each SCell.

In a possible implementation of the third aspect, the first signal is a system message SIB1 or another system message SIB that is broadcast and sent via the PCell.

In a possible implementation of the third aspect, the first signal includes first domain information; and a value of the first domain information is a seventh parameter value (for example, true), and the SIB1 is the signal sent by the network device based on the request of the UE; or a value of the first domain information is an eighth parameter value (for example, false), and the SIB1 is the signal periodically sent by the network device. For example, in this application, a domain on-demandSib1 ENUMERATED {true} may be added to the SIB1 or the another SIB message broadcast through the primary carrier of the UE. Information about the domain may be first domain information. In the first signal, each SCell corresponds to one domain on-demandSib1 ENUMERATED {true} and one cell identifier (for example, an ID or an index).

In a possible implementation of the third aspect, the first signal includes second domain information, and the SIB1 is the signal sent by the network device based on the request of the UE; or the first signal does not include the second domain information, and the SIB1 is the signal periodically sent by the network device.

In a possible implementation of the third aspect, the first signal is dedicated signaling sent by the PCell of the UE in a connected state.

In a possible implementation of the third aspect, the dedicated signaling is radio resource control RRC signaling, for example, RRC reconfiguration signaling.

In a possible implementation of the third aspect, the RRC signaling includes a first information element IE; and a value of the first IE is a ninth parameter value (for example, true), and the SIB1 is the signal sent by the network device based on the request of the UE; or a value of the first IE is a tenth parameter value (for example, false), and the SIB1 is the signal periodically sent by the network device.

In a possible implementation of the third aspect, the RRC signaling includes a second information element IE, and the SIB1 is the signal sent by the network device based on the request of the UE; or the RRC signaling does not include the second IE, and the SIB1 is the signal periodically sent by the network device.

According to a fourth aspect, an embodiment of this application provides a communication method, applied to a user equipment UE. The method includes: receiving a second reference signal sent by a network device, where the second reference signal is used for synchronization with the network device; and corresponding to the second reference signal being a discovery reference signal DRS signal or a low power synchronization signal LP-SS, determine that a sent synchronization signal/physical broadcast channel block SSB and/or a sent system message SIB1 are/is signals/a signal sent by the network device based on a request of the UE. In this case, in this application, whether the SSB and/or the SIB1 sent by the network device are/is on-demand signals/an on-demand signal may be indicated by using the DRS or the LP-SS. This reduces a resource consumed by the network device for broadcasting the SSB and the SIB1, and avoids a network access delay caused by the UE continuously receiving the SSB and the SIB1.

In a possible implementation of the fourth aspect, the method further includes: corresponding to the SSB being the signal sent by the network device based on the request of the UE, sending a first wake-up signal to the network device, and receiving the SSB sent by the network device based on the first wake-up signal; corresponding to the SIB1 being the signal sent by the network device based on the request of the UE, sending a second wake-up signal to the network device, and receiving the SIB1 sent by the network device based on the second wake-up signal; or corresponding to the SSB and the SIB1 being the signals sent by the network device based on the request of the UE, sending a third wake-up signal to the network device, receiving the SSB and the SIB1 sent by the network device based on the third wake-up signal.

In a possible implementation of the fourth aspect, the DRS includes a primary synchronization signal PSS and a secondary synchronization signal SSS.

According to a fifth aspect, an embodiment of this application provides a communication method, applied to a user equipment UE. The method includes: receiving a synchronization signal/physical broadcast channel block SSB that is sent by a network device, where the SSB includes first identification information; and determining, based on the first identification information, whether the UE needs to receive a system information block SIB1 after receiving the SSB. In this case, in this application, whether there is the SIB1 after the SSB is indicated by using a first bit in the SSB, thereby preventing the network device from periodically sending the SIB1, and implementing network energy saving. In addition, after obtaining the SSB and determining that there is no SIB1 after the SSB, the UE may avoid periodically receiving an SIB1 on each beam, thereby helping quickly access a network.

In a possible implementation of the fifth aspect, the method further includes: corresponding to the UE needing to receive the SIB1 after receiving the SSB, receiving an SIB1 sent by the network device; or corresponding to the UE not needing to receive the SIB1 after receiving the SSB, skipping receiving or decoding the SIB1.

In a possible implementation of the fifth aspect, the first identification information is a first bit in a master information block MIB of the SSB; and a value of the first bit is a first parameter value, and the UE does not need to receive the system information block SIB1 after receiving the SSB; or a value of the first bit is a second parameter value, and the UE needs to receive the system information block SIB1 after receiving the SSB. In this case, in this application, whether there is the SIB1 after the SSB is indicated by using a first bit in the SSB, thereby preventing the network device from periodically sending the SIB1, and implementing network energy saving. In addition, after obtaining the SSB and determining that there is no SIB1 after the SSB, the UE may avoid periodically receiving an SIB1 on each beam, thereby helping quickly access a network.

In a possible implementation of the fifth aspect, the first bit is a spare spare bit.

In a possible implementation of the fifth aspect, the first identification information is carried in a resource element RE in which a physical broadcast channel PBCH in the SSB is located; and the RE in which the PBCH is located is a zero-power RE, and the UE does not need to receive the system information block SIB1 after receiving the SSB; or the RE in which the PBCH is located is not a zero-power RE, and the UE needs to receive the SIB1 after receiving the SSB. In this case, in this application, whether there is the SIB1 after the SSB is indicated by using power of the RE of the PBCH in the MIB of the SSB, thereby implementing network energy saving and allowing the UE to quickly access a network.

According to a sixth aspect, an embodiment of this application provides a communication method, applied to a user equipment UE. The method includes: receiving a synchronization signal/physical broadcast channel block SSB that is sent by a network device, where first configuration information in a master information block MIB of the SSB is associated with a first table or a target parameter; and determining, based on the first table or the target parameter, whether the UE needs to receive the system information block SIB1 after receiving the SSB. In this case, in this application, whether there is an SIB1 after the SSB can be indicated by using the table or the target parameter associated with the configuration information in the MIB of the SSB. This reduces a resource consumed by the network device for broadcasting the SSB and the SIB1, and avoids a network access delay caused by the UE continuously receiving the SSB and the SIB1.

In a possible implementation of the sixth aspect, the method further includes: corresponding to the UE needing to receive the system information block SIB1 after receiving the SSB, receiving an SIB1 sent by the network device; or corresponding to the UE not needing to receive the SIB1 after receiving the SSB, skipping receiving or decoding the SIB1.

In a possible implementation of the sixth aspect, the first configuration information is SIB1 configuration information (pdcch-ConfigSIB1), and the SIB1 configuration information is used to configure a Type0-PDCCH common search space CSS for decoding the SIB1, and is further used to configure a control resource set CORESET for the Type0-PDCCH CSS. The first table is a table corresponding to the Type0-PDCCH CSS, and four most significant bits of the SIB1 configuration information correspond to an index of a data row in the first table. Alternatively, the first table is a table corresponding to the CORESET, and four least significant bits of the SIB1 configuration information correspond to an index of a data row in the first table.

In a possible implementation of the sixth aspect, the first table corresponds to a UE that supports network energy saving NES, and the UE does not need to receive the SIB1 after receiving the SSB; or the first table corresponds to a UE that does not support network energy saving NES, and the UE needs to receive the SIB1 after receiving the SSB.

In a possible implementation of the sixth aspect, the first table includes a first entry; and a value of the first entry in the data row indexed based on the SIB1 configuration information in the first table is a third parameter value, and the UE does not need to receive the system information block SIB1 after receiving the SSB; or a value of the first entry in the data row indexed based on the SIB1 configuration information in the first table is a fourth parameter value, and the UE needs to receive the system information block SIB1 after receiving the SSB.

In a possible implementation of the sixth aspect, the data row indexed based on the SIB1 configuration information in the first table is a reserved row, and the UE does not need to receive the system information block SIB1 after receiving the SSB; or the data row indexed based on the SIB1 configuration information in the first table is not a reserved row, and the UE needs to receive the SIB1 after receiving the SSB.

In a possible implementation of the sixth aspect, the first configuration information is a subcarrier offset in the MIB of the SSB (ssb-SubcarrierOffset), the subcarrier offset is used to calculate a k_SSB parameter, and the target parameter is the k_SSB parameter; and a value of the k_SSB parameter is a fifth parameter value, and the UE does not need to receive the SIB1 after receiving the SSB; or a value of the k_SSB parameter is a sixth parameter value, and the UE needs to receive the SIB1 after receiving the SSB.

According to a seventh aspect, an embodiment of this application provides a communication method, applied to a network device. The method includes: sending a synchronization signal/physical broadcast channel block SSB, where the SSB includes first identification information, and the first identification information indicates that a system information block SIB1 sent by the network device is a signal periodically sent by the network device or a signal sent by the network device based on a request of a UE.

In a possible implementation of the seventh aspect, the method further includes: corresponding to the SIB1 being the signal periodically sent by the network device, periodically sending the SIB1; or corresponding to the SIB1 being the signal sent by the network device based on the request of the UE, receiving a wake-up signal sent by the user equipment UE, and sending the SIB1 to the UE based on the wake-up signal.

In a possible implementation of the seventh aspect, the first identification information is a first bit in a master information block MIB of the SSB; and a value of the first bit is a first parameter value, and the SIB1 is the signal sent by the network device based on the request of the UE; or a value of the first bit is a second parameter value, and the SIB1 is the signal periodically sent by the network device.

In a possible implementation of seventh aspect, the first bit is a spare spare bit.

In a possible implementation of the seventh aspect, the first identification information is carried in a resource element RE in which a physical broadcast channel PBCH in the SSB is located; and the RE in which the PBCH is located is a zero-power RE, and the SIB1 is the signal sent by the network device based on the request of the UE; or the RE in which the PBCH is located is not a zero-power RE, and the SIB1 is the signal periodically sent by the network device.

According to an eighth aspect, an embodiment of this application provides a communication method, applied to a network device. The method includes: sending a synchronization signal/physical broadcast channel block SSB, and first configuration information in a master information block MIB of the SSB, where the first configuration information is associated with a first table or a target parameter, and the first table and the target parameter indicate that a system information block SIB1 sent by the network device is a signal periodically sent by the network device or a signal sent by the network device based on a request of UE.

In a possible implementation of the eighth aspect, corresponding to the SIB1 being the signal periodically sent by the network device, the SIB1 is periodically sent; or corresponding to the SIB1 being the signal sent by the network device based on the request of the UE, a wake-up signal sent by the user equipment UE is received, and the SIB1 is sent based on the wake-up signal.

In a possible implementation of the eighth aspect, the first configuration information is SIB1 configuration information (pdcch-ConfigSIB1), and the SIB1 configuration information is used to configure a Type0-PDCCH common search space CSS for decoding the SIB1, and is further used to configure a control resource set CORESET for the Type0-PDCCH CSS. The first table is a table corresponding to the Type0-PDCCH CSS, and four most significant bits of the SIB1 configuration information correspond to an index of a data row in the first table. Alternatively, the first table is a table corresponding to the CORESET, and four least significant bits of the SIB1 configuration information correspond to an index of a data row in the first table.

In a possible implementation of the eighth aspect, the first table corresponds to a UE that supports network energy saving NES, and the SIB1 is the signal sent by the network device based on the request of the UE; or the first table corresponds to a UE that does not support network energy saving NES, and the SIB1 is the signal periodically sent by the network device.

In a possible implementation of the eighth aspect, the first table includes a first entry; and a value of the first entry in the data row indexed based on the SIB1 configuration information in the first table is a third parameter value, and the SIB1 is the signal sent by the network device based on the request of the UE; or a value of the first entry in the data row indexed based on the SIB1 configuration information in the first table is a fourth parameter value, and the SIB1 is the signal periodically sent by the network device.

In a possible implementation of the eighth aspect, the data row indexed based on the SIB1 configuration information in the first table is a reserved row, and the SIB1 is the signal sent by the network device based on the request of the UE; or the data row indexed based on the SIB1 configuration information in the first table is not a reserved row, and the SIB1 is the signal periodically sent by the network device.

In a possible implementation of the eighth aspect, the first configuration information is a subcarrier offset in the MIB of the SSB (ssb-SubcarrierOffset), the subcarrier offset is used to calculate a k_SSB parameter, and the target parameter is the k_SSB parameter; and a value of the k_SSB parameter is a fifth parameter value, and the SIB1 is the signal sent by the network device based on the request of the UE; or a value of the k_SSB parameter is a sixth parameter value, and the SIB1 is the signal periodically sent by the network device.

According to a ninth aspect, an embodiment of this application provides a communication method, applied to a network device. The method includes: sending a first signal on a primary cell PCell in which a primary carrier of a user equipment UE is located, where the first information indicates a synchronization signal/physical broadcast channel block SSB and/or system information SIB1 that are/is sent on at least one secondary cell SCell in which a secondary carrier of the UE is located are/is signals/a signal periodically sent by the network device or signals/a signal sent by the network device based on a request of the UE.

In a possible implementation of the ninth aspect, corresponding to the SSB being the signal sent by the network device based on the request of the UE, a first wake-up signal sent by the UE is received on the at least one SCell, and the SSB is sent on the at least one SCell based on the first wake-up signal; corresponding to the SIB1 being the signal sent by the network device based on the request of the UE, a second wake-up signal sent by the UE is received on the at least one SCell, and the SIB1 is sent on the at least one SCell based on the second wake-up signal; or corresponding to both the SSB and the SIB1 being the signals sent by the network device based on the request of the UE, a third wake-up signal sent by the UE is received on the at least one SCell, and the SSB and the SIB1 are sent on the at least one SCell based on the third wake-up signal.

In a possible implementation of the ninth aspect, the first signal is a system message SIB1 or another system message SIB that is broadcast and sent via the PCell.

In a possible implementation of the ninth aspect, the first signal includes first domain information; and a value of the first domain information is a seventh parameter value, and the SIB1 is the signal sent by the network device based on the request of the UE; or a value of the first domain information is an eighth parameter value, and the SIB1 is the signal periodically sent by the network device.

In a possible implementation of the ninth aspect, the SIB includes second domain information, and the SIB1 is the signal sent by the network device based on the request of the UE; or the SIB does not include the second domain information, and the SIB1 is the signal periodically sent by the network device.

In a possible implementation of the ninth aspect, the first signal is dedicated signaling sent by the PCell of the UE in a connected state.

In a possible implementation of the ninth aspect, the dedicated signaling is radio resource control RRC signaling.

In a possible implementation of the ninth aspect, the RRC signaling includes a first information element IE; and a value of the first IE is a ninth parameter value, and the SIB1 is the signal sent by the network device based on the request of the UE; or a value of the first IE is a tenth parameter value, and the SIB1 is the signal periodically sent by the network device.

In a possible implementation of the ninth aspect, the RRC signaling includes a second information element IE, and the SIB1 is the signal sent by the network device based on the request of the UE; or the RRC signaling does not include the second IE, and the SIB1 is the signal periodically sent by the network device.

According to a tenth aspect, an embodiment of this application provides a communication method, applied to a network device. The method includes: sending a second reference signal, where the second reference signal is used for synchronization between a user equipment and the network device; and corresponding to the second reference signal being a discovery reference signal DRS signal or a low power synchronization signal LP-SS, a synchronization signal/physical broadcast channel block SSB and/or a system message SIB1 sent by the network device are/is signals/a signal sent by the network device based on a request of the UE.

In a possible implementation of the tenth aspect, the method further includes: corresponding to the SSB being the signal sent by the network device based on the request of the UE, receiving a first wake-up signal sent by the UE, and sending the SSB based on the first wake-up signal; corresponding to the SIB1 being the signal sent by the network device based on the request of the UE, sending a second wake-up signal to the network device, and receiving the SIB1 sent by the network device based on the second wake-up signal; or corresponding to the SSB and the SIB1 being the signals sent by the network device based on the request of the UE, sending a third wake-up signal to the network device, receiving the SSB and the SIB1 sent by the network device based on the third wake-up signal.

In a possible implementation of the tenth aspect, the DRS includes a primary synchronization signal PSS and a secondary synchronization signal SSS.

According to an eleventh aspect, an embodiment of this application provides a communication method, applied to a network device. The method includes: sending a synchronization signal/physical broadcast channel block SSB, where the SSB includes first identification information, and the first identification information indicates whether the network device sends a system information block SIB1 after sending the SSB.

In a possible implementation of the eleventh aspect, the method further includes: corresponding to the first identification information indicating that the network device sends the SIB1 after sending the SSB, sending the SIB1; or corresponding to the first identification information indicating that the network device does not send the SIB1 after sending the SSB, skipping sending the SIB1.

In a possible implementation of the eleventh aspect, the first identification information is a first bit in a master information block MIB of the SSB; and a value of the first bit is a first parameter value, and the first identification information indicates that the network device does not send the SIB1 after sending the SSB; or a value of the first bit is a second parameter value, and the first identification information indicates that the network device sends the SIB1 after sending the SSB.

In a possible implementation of the eleventh aspect, the first bit is a spare spare bit.

In a possible implementation of the eleventh aspect, the first identification information is carried in a resource element RE in which a physical broadcast channel PBCH in the SSB is located; and the RE in which the PBCH is located is a zero-power RE, and the first identification information indicates that the network device does not send the SIB1 after sending the SSB; or the RE in which the PBCH is located is not a zero-power RE, and the first identification information indicates that the network device sends the SIB1 after sending the SSB.

According to a twelfth aspect, an embodiment of this application provides a communication method, applied to a network device. The method includes: sending a synchronization signal/physical broadcast channel block SSB, where first configuration information in a master information block MIB of the SSB is associated with a first table or a target parameter, and the first table and the target parameter indicate whether the network device sends a system information block SIB1 after sending the SSB.

In a possible implementation of the twelfth aspect, the method further includes: corresponding to the first identification information indicating that the network device sends the SIB1 after sending the SSB, sending the SIB1; or corresponding to the first identification information indicating that the network device does not send the SIB1 after sending the SSB, skipping sending the SIB1.

In a possible implementation of the twelfth aspect, the first configuration information is SIB1 configuration information (pdcch-ConfigSIB1), and the SIB1 configuration information is used to configure Type0-PDCCH common search space CSS for decoding the SIB1, and is further used to configure a control resource set CORESET for the Type0-PDCCH CSS. The first table is a table corresponding to the Type0-PDCCH CSS, and four most significant bits of the SIB1 configuration information correspond to an index of a data row in the first table. Alternatively, the first table is a table corresponding to the CORESET, and four least significant bits of the SIB1 configuration information correspond to an index of a data row in the first table.

In a possible implementation of the twelfth aspect, the first table corresponds to a UE that supports network energy saving NES, and the first identification information indicates that the network device does not send the SIB1 after sending the SSB; or the first table corresponds to a UE that does not support network energy saving NES, and the first identification information indicates that the network device sends the SIB1 after sending the SSB.

In a possible implementation of the twelfth aspect, the first table includes a first entry; and a value of the first entry in the data row indexed based on the SIB1 configuration information in the first table is a third parameter value, and the first identification information indicates that the network device does not send the SIB1 after sending the SSB; or a value of the first entry in the data row indexed based on the SIB1 configuration information in the first table is a fourth parameter value, and the first identification information indicates that the network device sends the SIB1 after sending the SSB.

In a possible implementation of the twelfth aspect, the data row indexed based on the SIB1 configuration information in the first table is a reserved row, and the first identification information indicates that the network device does not send the SIB1 after sending the SSB; or the data row indexed based on the SIB1 configuration information in the first table is not a reserved row, and the first identification information indicates that the network device sends the SIB1 after sending the SSB.

In a possible implementation of the twelfth aspect, the first configuration information is a subcarrier offset in the MIB of the SSB (ssb-SubcarrierOffset), the subcarrier offset is used to calculate a k_SSB parameter, and the target parameter is the k_SSB parameter; and a value of the k_SSB parameter is a fifth parameter value, and the first identification information indicates that the network device does not send the SIB1 after the network device does not send the SSB; or a value of the k_SSB parameter is a sixth parameter value, and the first identification information indicates that the network device does not send the SIB1 after sending the SSB.

According to a thirteenth aspect, an embodiment of this application provides a user equipment UE. The UE includes: a transceiver, configured to perform a receiving operation and a sending operation in the method according to the first aspect to the sixth aspect and any one of the possible implementations of the first aspect to the sixth aspect; and a processor, configured to perform an operation other than the receiving operation and the sending operation in the method according to the first aspect to the sixth aspect and any one of the possible implementations of the first aspect to the sixth aspect.

According to a fourteenth aspect, an embodiment of this application provides a network device. The network device includes: a transceiver, configured to perform a receiving operation and a sending operation in the method according to the seventh aspect to the twelfth aspect and any one of the possible implementations of the seventh aspect to the twelfth aspect; and a processor, configured to perform an operation other than the receiving operation and the sending operation in the method according to the seventh aspect to the twelfth aspect and any one of the possible implementations of the seventh aspect to the twelfth aspect.

According to a fifteenth aspect, an embodiment of this application provides a communication system. The communication system includes a user equipment UE and a network element. The UE is configured to perform the method according to the first aspect to the sixth aspect and any one of the possible implementations of the first aspect to the sixth aspect. The network element is configured to perform the method according to the seventh aspect to the twelfth aspect and any one of the possible implementations of the seventh aspect to the twelfth aspect.

According to a sixteenth aspect, an embodiment of this application provides a computer storage medium, configured to store a computer program. When the computer program is executed, the communication method according to the first aspect to the twelfth aspect and any one of the possible implementations of the first aspect to the twelfth aspect is implemented.

For beneficial effects of the seventh aspect to the sixteenth aspect, refer to beneficial effects of the first aspect to the sixth aspect. Details are not described herein again.

### BRIEF DESCRIPTION OF DRAWINGS

FIG. 1A is a diagram of an architecture of a communication system according to an embodiment of this application;
FIG. 1B is a diagram of content of an SSB according to an embodiment of this application;
FIG. 1C is a diagram of time-frequency resource mapping of a PSS, an SSS, a PBCH, and a PBCH-associated DM-RS of an SSB according to an embodiment of this application;
FIG. 1D is a time sequence diagram of an SSB and an SIB1 in a signal broadcast period according to an embodiment of this application;
FIG. 2A is a diagram of a communication system according to an embodiment of this application;
FIG. 2B is a diagram of a communication system according to an embodiment of this application;
FIG. 3A is a diagram of Table 13-16 specified in a protocol according to an embodiment of this application;
FIG. 3B is a diagram of Table 13-17 specified in a protocol according to an embodiment of this application;
FIG. 4A is a diagram of three multiplexing patterns of an SSB and CORESET#0 according to an embodiment of this application;
FIG. 4B is a schematic flowchart in which a UE searches a table by using pdcch-ConfigSIB1 according to an embodiment of this application;
FIG. 4C is a diagram of Table 13-18 specified in a protocol according to an embodiment of this application;
FIG. 4D is a diagram of Table 13-11 specified in a protocol according to an embodiment of this application;
FIG. 5A is a diagram of content of an MIB of an SSB according to an embodiment of this application;
FIG. 5B is a schematic flowchart of a communication method according to an embodiment of this application;
FIG. 5C is a time sequence diagram of a WUS, an SSB, and an SIB1 in a signal broadcast period according to an embodiment of this application;
FIG. 6 is a schematic flowchart of a communication method according to an embodiment of this application;
FIG. 7A is a schematic flowchart of a communication method according to an embodiment of this application;
FIG. 7B is a time sequence diagram of a DRS, a WUS, an SSB, and an SIB1 in a signal broadcast period according to an embodiment of this application;
FIG. 7C is a time sequence diagram of a DRS, a WUS, and an SSB in a signal broadcast period according to an embodiment of this application;
FIG. 7D is a time sequence diagram of a DRS, a WUS, an SSB, and an SIB1 in a signal broadcast period according to an embodiment of this application;
FIG. 7E is a time sequence diagram of a DRS, a WUS, an SSB, and an SIB1 in a signal broadcast period according to an embodiment of this application;
FIG. 8A and FIG. 8B are a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11 is a schematic flowchart of a communication method according to an embodiment of this application;
FIG. 12 is a schematic flowchart of a communication method according to an embodiment of this application;
FIG. 13 is a schematic flowchart of a communication method according to an embodiment of this application;
FIG. 14 is a schematic flowchart of a communication method according to an embodiment of this application;
FIG. 15 is a diagram of a hardware structure of a network device according to an embodiment of this application; and
FIG. 16 is a diagram of a hardware structure of a UE according to an embodiment of this application.

### DESCRIPTION OF EMBODIMENTS

Illustrative embodiments of this application include but are not limited to a communication method, a device, and a system.

Nouns used in this application are first described.

### 1. Cell access:

A UE accessing a cell mainly includes the following phases: cell search and random access. Specifically, after a cell search procedure, the UE has implemented downlink synchronization with the cell and obtained a physical cell identifier (physical cell identifier, PCI) of the cell. Subsequently, the UE may obtain system information (system information, SI) of the cell to configure the cell based on the system message, thereby accessing the cell and operating normally in the cell.

### 2. System information (system information, SI):

The SI mainly includes a master information block (master information block, MIB) and system information blocks (system information blocks, SIBs), and SIBs other than the MIB and SIB1 are referred to as other information blocks (other system information, OSI). System messages required by the UE to camp on a cell normally and initiate random access include: the MIB and the SIB1.

Usually, in addition to the MIB and the SIB1, a network device may provide the other system information (namely, the OSI) to the UE when required by the UE. In this case, the OSI is a signal sent by the network device based on a request of the UE, and is referred to as an on-demand (on-demand) signal.

In the following embodiments of this application, the signal sent by the network device based on the request of the UE may be referred to as the on-demand signal, and a signal periodically sent by the network device is referred to as an always-on (always on) signal.

5G NR introduces two types of information: minimum system information (minimum SI, MSI) and a remaining minimum system message (remaining minimum SI, RMSI). Table 1 shows a relationship between MSI, RMSI, an MIB, and an SIB.

**Table 1:**

| MSI | RMSI | OSI |
|---|---|---|
| MIB+SIB1 | SIB1 | SIB2/3...X |

A cell sends system information to all UEs in the cell via a broadcast control channel (broadcast control channel, BCCH). The BCCH is mapped to a broadcast channel (broadcast channel, BCH) and a downlink shared channel (downlink shared channel, DL-SCH). In addition, the BCH is only used to transmit MIB information and is mapped to a physical broadcast channel (physical broadcast channel, PBCH); and the DL-SCH is used to transmit various SIB information and is mapped to a physical downlink shared channel (physical downlink shared channel, PDSCH).

### 3. Synchronization signal/physical broadcast channel block (SS/PBCH Block, SSB):

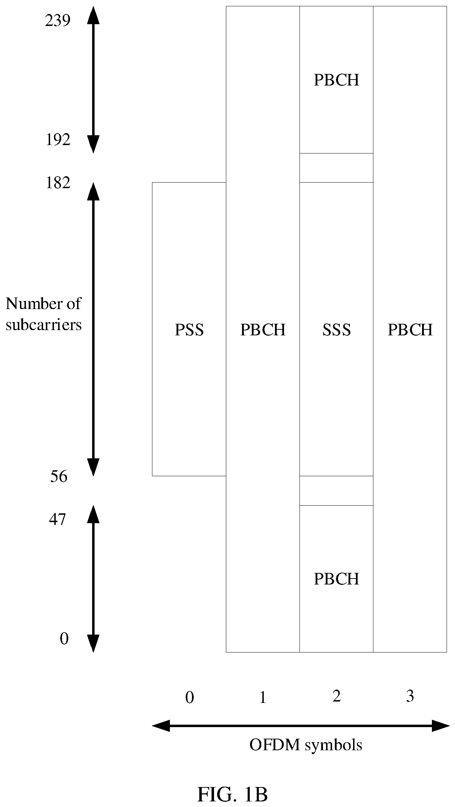

As shown in FIG. 1B, an SSB includes a primary synchronization signal (primary synchronization signal, PSS), a secondary synchronization signal (secondary synchronization signal, SSS), and a physical broadcast channel (physical broadcast channel, PBCH). The SSB occupies four orthogonal frequency division multiplexing (orthogonal frequency division multiplexing, OFDM) symbols in time domain, numbered from 0 to 3. One SSB occupies 240 contiguous subcarriers in frequency domain, that is, occupies 20 RB (1 RB=12 subcarriers) in frequency domain, and the subcarriers are numbered from 0 to 239 in a block.

The UE may perform downlink time-domain synchronization with the cell by using the PSS and the SSS, and may decode a received SIB1 by using system information carried on the PBCH, such as a master information block (master information block, MIB), to obtain basic configuration information required for accessing the cell, so that the UE can access the cell based on the basic configuration information obtained through decoding.

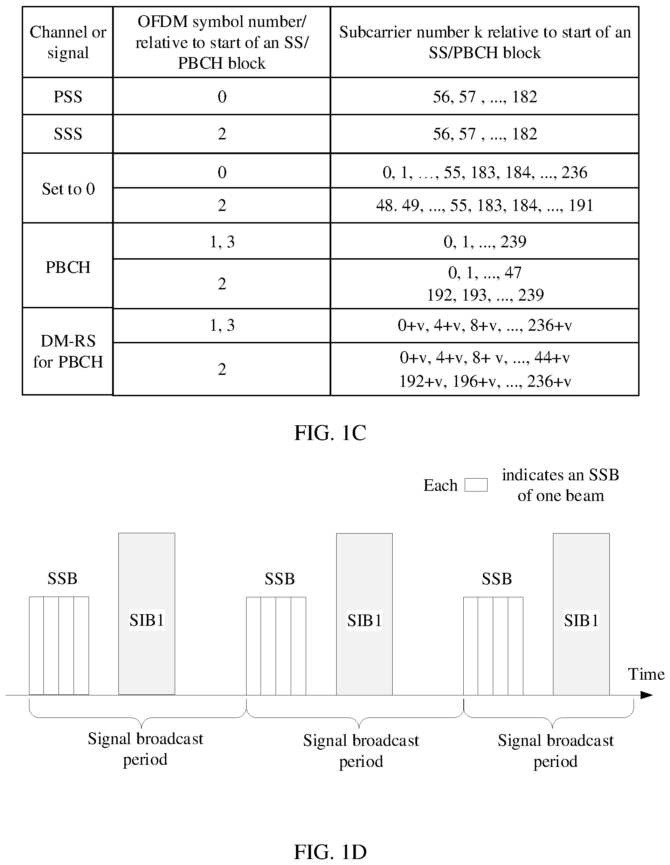

As shown in FIG. 1C, the SSB defines time-frequency resource mapping of the PSS, the SSS, the PBCH, and a demodulation reference signal (demodulation reference signal, DMRS) (namely, a DM-RS) associated with the PBCH to a time-frequency resource. Specifically, FIG. 1C shows a time-frequency resource mapping relationship in Table 7.4.3.1-1 in the protocol TS 38.211, where k and l respectively represent a time domain position and a frequency domain position. In addition, a value v in the table shown in FIG. 1C is determined by a physical cell identifier (identification, ID), and $v = {N}_{ID}^{cell} mod 4$. This is performed to stagger PBCH DMRSs in frequency domain, thereby reducing inter-cell interference.${N}_{ID}^{cell} = {3 N}_{ID}^{\left(1\right)} + 3 {N}_{ID}^{\left(2\right)}$. 5G defines 1008 physical cell IDs with a value ranging from 0 to 1007. The UE may obtain ${N}_{ID}^{\left(1\right)}$ and ${N}_{ID}^{\left(2\right)}$ in the foregoing formula by detecting the PSS sequence and an SSS sequence. ${N}_{ID}^{\left(1\right)} ∈ \left\{0,1,…,335\right\}$, and ${N}_{ID}^{\left(2\right)} ∈ \left\{0, 1, 2\right\}$.

In FIG. 1A, an example in which a network device 02 broadcasts an SSB and an SIB1 on only four beams is used. In practice, the network device may periodically broadcast the SSB and the SIB1 on more or fewer beams. In addition, FIG. 1A shows the SSB and the SIB1 in one cell for a UE 01. In practice, the UE may receive SSBs and SIB1 in a plurality of cells. This is not specifically limited in this application.

A period in which the network device broadcasts the SSB and the SIB1 may be, for example, 20 milliseconds (ms), or may be another period length. In this case, both the SSB and the SIB1 are signals periodically sent by the network device, namely, always-on signals. As shown in FIG. 1D, generally, the network device 02 periodically broadcasts the SSB and the SIB1 on a plurality of beams (In FIG. 1D, an example in which the SSB is broadcast on four beams is used for description). In this case, the UE may synchronize with the network device 02 based on a received SSB, which may be specifically downlink synchronization. Downlink synchronization includes content such as clock synchronization, radio frame synchronization, symbol synchronization, and obtaining an identifier of the network device 02 (the cell). Then, the UE may decode the received SIB1 based on an MIB carried via the PBCH in the SSB, to obtain basic configuration information required for accessing the network device 02. However, the network device 02 continuously sends the SSB and the SIB1 on a plurality of beams, resulting in high power consumption of the network device 021.

For example, Table 2 is a percentage of increased power consumption of the network device when sending the SSB and the SIB1 in frequency bands FR1 and FR2.

**Table 2:**

| | FR1 @ 30 kHz & 8 beams | FR2 @ 120 kHz & 64 beams |
|---|---|---|
| SSB | 6.5% | 14.8% |
| SIB1 | 22.7% | 14.8% |
| Total | 29.2% | 29.6% |

FR1 supports a maximum of eight beams, and FR2 supports a maximum of 64 beams. An operating frequency band of FR1 ranges from 450 MHz to 6 GHz, which is also referred to as a sub-6 GHz frequency band, and eight beams (beam) are supported. An operating frequency band of FR2 ranges from 24.25 GHz to 52.6 GHz, which is also referred to as a millimeter wave, and 64 beams are supported. For example, FR1 in Table 2 may be a 30 kHz operating frequency band with 8 beams (that is, FR1@30 kHz & 8 beam), FR2 may be a 120 kHz operating frequency band with 64 beams (that is, FR2@120 kHz & 64 beam). It can be learned that minimizing transmission of the SSB or the SIB1 may reduce network power consumption and implement network energy saving (network energy saving, NES).

Therefore, this application provides a communication system. The communication system may be a fifth generation (5G) communication system, a hybrid architecture of LTE and 5G, a 5G NR system, a new communication system (for example, 6G) emerging in future communication development, or the like.

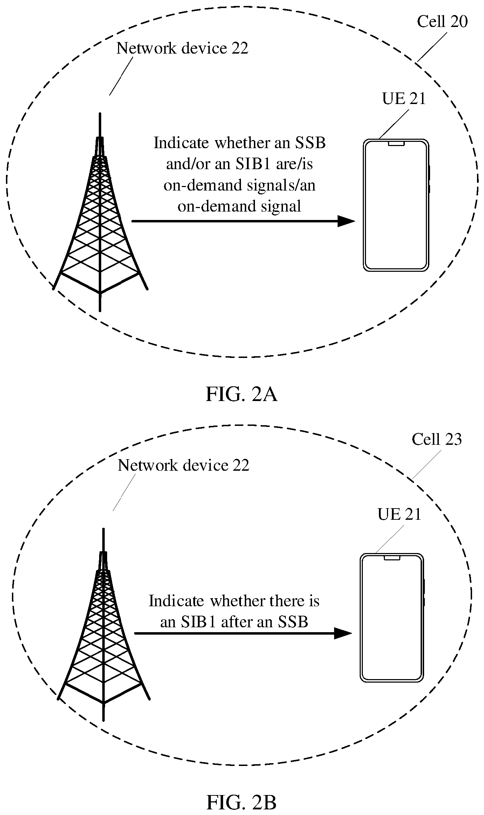

The communication system may be an example shown in FIG. 2A or FIG. 2B, and includes a network device 22 and a UE 21.

In the communication system shown in FIG. 2A, the network device 22 may indicate to the UE 21 whether one of an SSB or an SIB1 is sent to the UE on-demand (on-demand), that is, whether one of the SSB or the SIB1 is an on-demand signal. If the network device indicates that the SSB or the SIB1 is an on-demand signal, the network device may send the SSB or the SIB1 after receiving a request of the UE, but does not actively send the SSB or the SIB1. In this case, the network device 02 does not need to periodically broadcast one of the SSB or the SIB1, thereby reducing power consumption of the network device 02, and implementing network energy saving NES. In addition, when a network device 22 in a cell 20 in which the UE is located indicates to the UE that the SSB or the SIB1 is an on-demand signal, the UE 21 receives the SSB or the SIB1 only when the UE 21 initiates a request to the network device 22. This can reduce resource consumption caused by the UE receiving a signal, reduce resource consumption caused in a process of decoding the SIB1, and help the UE quickly access the network device.

Optionally, an MIB of the SSB delivered by the network device to the UE may include identification information, and the identification information indicates whether the SIB1 is an always-on signal or an on-demand signal. In this case, when the SIB1 is an on-demand signal, the UE may request the network device to send the SIB1.

Optionally, a table or a target parameter associated with configuration information in the MIB of the SSB delivered by the network device to the UE may indicate whether the SIB1 is an always-on signal or an on-demand signal. Further, when the SIB1 is an on-demand signal, the UE may request the network device to send the SIB1.

Optionally, the network device may periodically broadcast, at low power consumption, a synchronization signal used for downlink synchronization, for example, a discovery reference signal (discovery reference signal, DRS) or a low power synchronization signal (low power synchronization signal, LP-SS). In this case, the DRS and the LP-SS can indicate that the SSB and the SIB1 are on-demand signals.

Optionally, in a carrier aggregation scenario, the UE may use system information SIB or dedicated signaling to indicate, on a primary cell (primary cell, PCell) in which a primary carrier of the UE is located, whether an SSB and/or an SIB1 of a secondary cell (SCell) in which a secondary carrier of the UE is located are/is on-demand signals/an on-demand signal.

In a communication system shown in FIG. 2B, the network device 22 may indicate to the UE whether the SIB1 needs to be received after receiving the SSB, that is, whether the network device sends the SIB1 after sending the SSB. In this case, the network device 02 does not need to periodically broadcast the SIB1, thereby reducing power consumption of the network device 02 and implementing network energy saving. In addition, when a network device 22 in a cell 23 in which the UE is located indicates that the UE does not need to receive the SIB1 after receiving the SSB, resource consumption caused by the UE receiving the SIB1 may be reduced, and resource consumption caused by decoding the SIB1, thereby helping the UE quickly access the network device.

Optionally, an MIB of the SSB delivered by the network device to the UE may include identification information, and the identification information indicates whether the UE needs to receive the SIB1 after receiving the SSB. In this case, in a scenario in which the UE does not need to access the network device, the identification information may indicate that the UE does not need to receive the SIB1 after receiving the SSB. Then, the UE does not perform a procedure of receiving and decoding the SIB1. On the contrary, in a scenario in which the UE needs to access the network device, the identification information may indicate that the UE needs to receive the SIB1 after receiving the SSB. In this case, the UE may receive and decode the SIB1 based on the received SSB, and further access the network device based on the SSB and the SIB1.

Optionally, a table or a target parameter associated with configuration information in the MIB of the SSB delivered by the network device to the UE may indicate whether the SIB1 needs to be received after the SSB is received. The table associated with the configuration information may be a table searched based on the configuration information in the MIB, and the target parameter may be a parameter calculated based on the configuration information in the MIB.

Similarly, the table or the target parameter associated with the foregoing configuration information may indicate that the UE does not need to receive the SIB1 after receiving the SSB. Then, the UE does not perform a procedure of receiving and decoding the SIB1. On the contrary, the table or the target parameter associated with the configuration information may indicate that the UE needs to receive the SIB1 after receiving the SSB. In this case, the UE may receive and decode the SIB1 based on the received SSB, and further access the network device based on the SSB and the SIB1.

In embodiments provided in this application, the network device 22 may be any device with a wireless transceiver function located on a network side, and includes but is not limited to: a base station in 5G new radio (new radio, NR) (for example, gNodeBs or gNBs), or a transmission reception point (transmission receiving point/transmission reception point, TRP), or the like. The network device 22 may be: a macro base station, a micro base station, a pico base station, a small cell, a relay station, a balloon station, or the like. The network device 22 may include one or more co-located or non-co-located transmission points (Transmission Reception Points, TRPs). The network device 22 may alternatively be a radio controller, a central unit (centralized unit, CU), and/or a distribution unit (distributed unit, DU) in a cloud radio access network (cloud radio access network, CRAN) scenario. The network device 22 may communicate with a terminal device, or may communicate with the terminal device through a relay station.

The UE 21 may communicate with a plurality of base stations in different technologies. For example, the UE 21 may communicate with a base station supporting an LTE network, a base station supporting a 5G network, a base station supporting a 3G or 2G network, or a base station of a higher standard such as 6G, or may further perform dual connectivity with the base station supporting the LTE network and the base station supporting the 5G network.

In embodiments provided in this application, the UE 21 may be in various forms, for example, a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. The UE may also be referred to as a terminal device, an access terminal device, a vehicle-mounted terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal may also be a fixed terminal or a mobile terminal.

In some embodiments, the UE in the communication system may be energy saving UE, a cell in which the UE is located may be an energy saving carrier, and the cell in which the UE is located may be an energy saving cell. In this case, the network device and the UE in the communication system have an energy saving requirement.

In FIG. 2A and FIG. 2B, an example in which the communication system includes the network device 22 and the UE 21 is used for description. In another possible implementation, the communication system may include a plurality of UEs or a plurality of network devices. Alternatively, in another possible implementation, the network device 22 in the communication system may be replaced with a network element in another form. This is not limited herein. In this application, only an example in which the UE 21 interacts with the network device 22 in the communication systems in FIG. 2A and FIG. 2B is used for description.

Table 3 is a diagram of content of MIB messages for LTE and NR, that is, Table 3 shows content of MIB messages for 4G and 5G (for example, 5G NR).

**Table 3:**

| 4G | 5G |
|---|---|
| System frame number (SFN(8BIT)) | System frame number (SFN(6BIT)) |
| Downlink bandwidth (dl-Bandwidth) | Subcarrier Spacing (subCarrierSpacingCommon) |
| PHICH Configuration (phich-Config) | Subcarrier offset (ssb-SubcarrierOffset) |
| SIB1 scheduling information (schedulingInfoSIB1) | dmrs-TypeA-Position |
| | PDCCH SIB1 configuration (pdcch-ConfigSIB1) |
| | Cell barred (cellBarred) |
| | Inter-frequency reselection indication (interFreqReselection) |

It can be learned from Table 3 that an MIB message for 4G includes the system frame number (SFN(8BIT)), the downlink bandwidth (dl-Bandwidth), the physical hybrid automatic repeat request indicator channel (physical hybrid ARQ indicator channel, PHICH) configuration (phich-Config), and the SIB1 scheduling information (schedulingInfoSIB1).

A comparison of the MIB messages in 5G NR and 4G shows that the MIB messages both include the SFN. This application is mainly applied to a 5G NR system. The following describes the content in the MIB message for 5G in detail.

FrameNumber in 5G NR is a system frame number, and is used for synchronization between the UE and the network side. The MIB message carries only six most significant bits (MSB) of the 10-bit system frame number. Four least significant bits (LSB) of the SFN are transmitted in a PBCH transport block, and the four least significant bits are included in PBCH payload (payload) information: ${a}_{\overline{A}} , {a}_{\overline{A} + 1} , {a}_{\overline{A} + 2}$, and ${a}_{\overline{A} + 3}$.

subCarrierSpacingCommon is a subcarrier spacing, and indicates a subcarrier spacing used for SIB1, Msg.2/4 (random access signaling) for initial access and SI. For a low frequency band (sub-6 GHz, namely, a frequency band below 6 GHz), a range of a subcarrier spacing SCS is <15khz, 30 kHz>. For a millimeter wave (mmWave), a subcarrier spacing is <60 kHz, 120 kHz>. This field is passed to a physical layer during PDSCH channel establishment.

ssb-subcarrierOffset is a subcarrier offset, and indicates a frequency domain offset of an SSB relative to a common resource block (Common Resource Block, CRB), namely, a number of subcarriers by which ${N}_{CRB}^{SSB}$ of the CRB is shifted.

pdcch-ConfigSIB1 indicates PDCCH SIB1 configuration, and is used to configure information about Type0-PDCCH common search space (CSS) for an SIB1, for example, a control resource set CORESET (such as ControlResourceSetZero (CORESET#0)) and a monitoring occasion (SearchSpace, such as SearchSpaceZero). The pdcch-ConfigSIB1 field includes eight bits. Four most significant bits are used to configure CORESET#0, and four least significant bits are used to configure SearchSpaceZero. pdcch-Config SIB1 is also RMSI-PDCCH-Config.

In addition, cellBarred indicates whether cell access is barred, that is, indicates whether a UE is barred from camping on the cell. interFreqReselection is an inter-frequency reselection indicator and indicates whether intra-frequency cell reselection is allowed. dmrs-TypeA-Position indicates a position of dmrs-TypeA and indicates a (first) downlink (DL) DM-RS position.

In addition, the ssb-subcarrierOffset field in the MIB may be used to calculate a value of k_{SSB}. The value of k_{SSB} is used to determine whether the UE is to receive an RMSI message (namely, the SIB1). In FR1, the value of k_{SSB} is calculated by using Formula (1). In FR2, the value of k_{SSB} is calculated by using Formula (2).$FR 1 : {k}_{SSB} = {a}_{\overline{A} + 5} \left|ssb-SubcarrierOffset\right.$ (1) $FR 2 : {k}_{SSB} = ssb - SubcarrierOffset$ (2) ${a}_{\overline{A} + 5}$ is obtained by using PBCH payload (payload) information and reported by the physical layer to a radio resource control (radio resource control, RRC) layer. Table 4 shows a relationship between different k_{SSB} and RMSI.

**Table 4:**

| KSSB range | **RMSI** presence | Subsequent information |
|---|---|---|
| FR1 *k_{SSB}* ≤ 2 3 | Present | CD-SSB, continuing to decode the RMSI |
| FR2 *k_{SSB}* ≤ 11 | | |
| FR1 24 ≤ *k_{SSB}* ≤ 29 | Absent | An SIB1 may be present after hopping, and hopping is required |
| | | $GSCN after hopping = {N}_{GSCN}^{Reference} + {N}_{GSCN}^{Offset}$ |
| FR2 12 ≤ *k_{SSB}* ≤ 13 | | ${N}_{GSCN}^{Reference}$: GSCN of one decoded SSB |
| | | ${N}_{GSCN}^{Offset}$: searching a table based on Kssb and pdcch-ConfigSIB 1 |
| FR1 *k_{SSB}* = 30 | Absent | Reserved (Reserved) |
| FR2 *k_{SSB}* = 14 | | |
| FR1 *k_{SSB}* = 31 | Absent | An SIB1 is absent in a range: $\left[{N}_{GSCN}^{R eference}-{N}_{GSCN}^{Start},{N}_{GSCN}^{R eference}+{N}_{GSCN}^{End}\right]$ |
| | | |
| | | ${N}_{GSCN}^{Start}$: four most significant bits of pdcch-ConfigSIB 1 in an MIB message |
| FR2 *k_{SSB}* = 15 | | |
| | | ${N}_{GSCN}^{End}$: four least significant bits of pdcch-ConfigSIB 1 in the MIB message |

It can be learned from Table 4 that, when FR1 k_{SSB} is less than or equal to 23 and FR2 k_{SSB} is less than or equal to 11, it means that the UE receives the RMSI after receiving the SSB. In this case, the SSB is referred to as a cell-defining SSB (Cell-Defining SSB, CD-SSB), indicating that the UE may continue to decode the RMSI subsequently, that is, may continue to decode the SIB1.

It can be learned from Table 4 that, when FR1 k_{SSB} is greater than or equal to 24 and less than or equal to 29, and FR2 k_{SSB} is greater than or equal to 12 and less than or equal to 13, it means that after receiving the SSB, the UE may receive the SIB1 by hopping to a resource. Hopped-to $GSCN = {N}_{GSCN}^{Reference} + {N}_{GSCN}^{Offset}$. ${N}_{GSCN}^{Reference}$ indicates a global synchronization channel number (Global Synchronization Channel Number, GSCN) of one decoded SSB. ${N}_{GSCN}^{Offset}$ is obtained by searching the table based on k_{SSB} and the pdcch-ConfigSIB1 field.

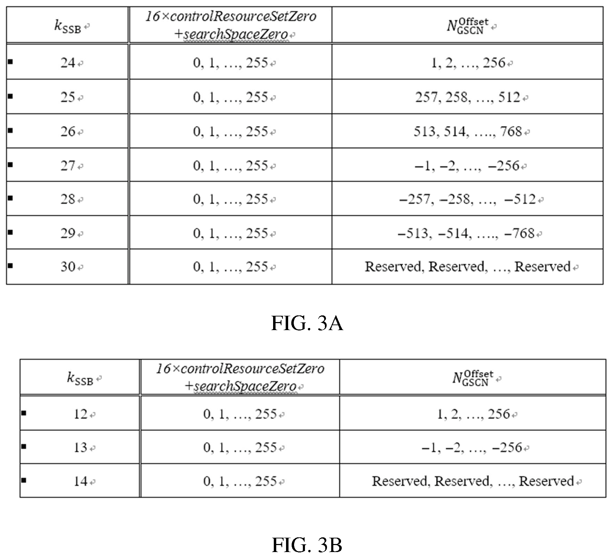

In an example, for FR1, ${N}_{GSCN}^{Offset}$ is obtained by searching, based on *k_{SSB}* and the pdcch-ConfigSIB1 field, Table 13-16 specified in a protocol. Table 13-16 shown in FIG. 3A shows mapping between ${N}_{GSCN}^{Offset}$ in FR1 and a combination of *k_{SSB},* a control resource set 0 (controlResourceSetZero, namely, CORESET#0), and a monitoring occasion 0 (searchSpaceZero) in pdech-ConfigSIB1.

In an example, for FR1, ${N}_{GSCN}^{Offset}$ is obtained by searching, based on *k_{SSB}* and the pdcch-ConfigSIB1 field, Table 13-16 specified in a protocol. Table 13-16 shown in FIG. 3A shows mapping between ${N}_{GSCN}^{Offset}$ in FR1 and a combination of *k_{SSB},* a control resource set 0 (controlResourceSetZero, namely, CORESET#0), and a monitoring occasion 0 (searchSpaceZero) in pdech-ConfigSIB1.

In an example, for FR2, ${N}_{GSCN}^{Offset}$ is obtained by searching, based on *k_{SSB}* and the pdcch-ConfigSIB1 field, Table 13-17 specified in a protocol. Table 13-17 shown in FIG. 3B shows mapping between ${N}_{GSCN}^{Offset}$ in FR2 and a combination of *k_{SSB},* a control resource set 0 (controlResourceSetZero, namely, CORESET#0), and a monitoring occasion 0 (searchSpaceZero) in pdcch-ConfigSIB1.

In addition, it can be learned from Table 4 that, when FR1 *k_{SSB}* is equal to 31 and FR2 *k_{SSB}* is equal to 13, it means that the UE does not receive the SIB1 after receiving the SSB. The SIB1 is absent in the range $\left[{N}_{GSCN}^{R eference}-{N}_{GSCN}^{Start},{N}_{GSCN}^{R eference}+{N}_{GSCN}^{End}\right]$. ${N}_{GSCN}^{Start}$ is the four most significant bits (bit) (namely, the four most significant bits) of the pdcch-ConfigSIB1 field in the MIB message. ${N}_{GSCN}^{End}$ is the four least significant bits (namely, four least significant bits) of the pdcch-ConfigSIB1 field in the MIB message.

The UE needs to decode the SSB and then decode a corresponding PDSCH based on an MIB indication, to obtain the SIB1. The SIB1 is scheduled via a PDCCH and a PDSCH. Specifically, to obtain the SIB1 from the PDSCH, the UE searches the Type0-PDCCH CSS for a PDCCH for scheduling an SIB1 PDSCH, that is, searches based on CORESET#0 and the Type0-PDCCH CSS.

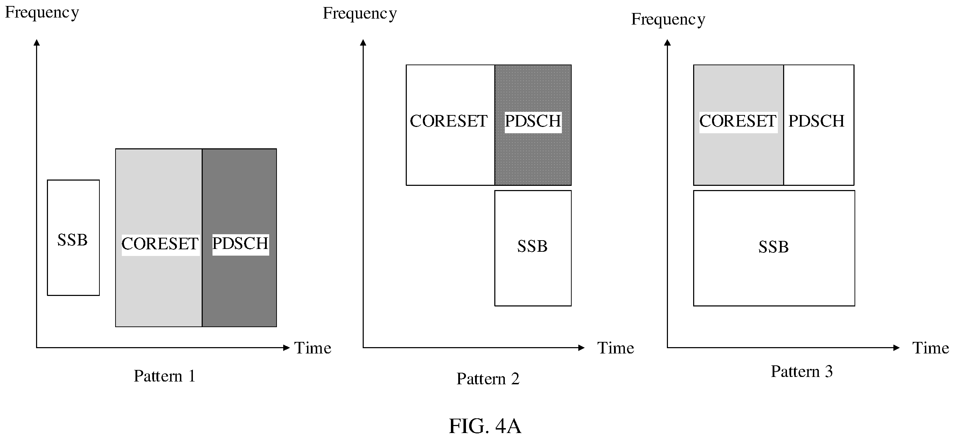

FIG. 4A shows three multiplexing patterns (pattern) of the SSB and CORESET#0 defined in NR. In this case, the UE selects, for the control resource set (for example, CORESET#0) for the Type0-PDCCH CSS, a time-frequency resource including several contiguous resource blocks and several consecutive OFDM symbols, to determine to select a specific multiplexing pattern to obtain the SIB1.

Optionally, the UE may determine the selected multiplexing pattern by searching a table by using the pdcch-ConfigSIB1 field in the SSB.

It may be understood that the SSB and CORESET#0 for the Type0-PDCCH CSS have great flexibility in a time-frequency domain resource, and have a complex correspondence. To represent this relationship by using a limited bit (bit) in the MIB, a mapping relationship needs to be constrained. A protocol defines a plurality of time-frequency mapping combination relationships. In an example, Table 13-1 to Table 13-15 defined in TS 38.213 show correspondences between the control resource set and parameters ControlResourceSetZero and SearchSpaceZero for different system configurations.

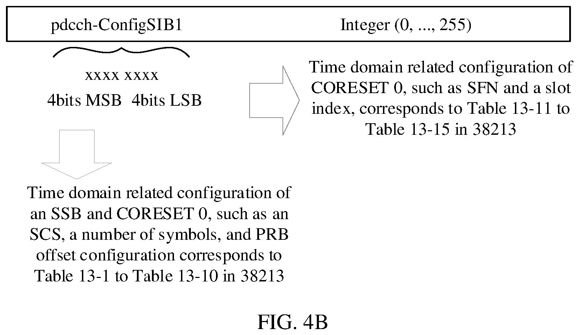

As shown in FIG. 4B, the UE may search Table 13-1 to Table 13-10 defined in TS 38.213 by using the four most significant bits (MSB) of pdcch-ConfigSIB1, to obtain a number of contiguous RBs in frequency domain, a number of contiguous symbols in time domain, and the like of the PDCCH. The UE may search Table 13-11 to Table 13-15 defined in TS38.213 by using the four least significant bits (LSB) of the pdcch-ConfigSIB1 field, to obtain a necessary parameter for calculating a start position of a monitoring occasion, and calculate the monitoring occasion.

Optionally, the UE may configure a selected table based on an SSB subcarrier spacing (sub-carrierspace, SCS), a PDCCH SCS, a frequency band width, whether spectrum sharing is enabled, and the like. Then, PDCCH search space is determined based on ControlResourceSetZero (namely, CORESET#0) and SearchSpaceZero configured in the pdcch-ConfigSIB1 field in the MIB.

For example, for the 10 tables from Table 13-1 to Table 13-10 defined in TS 38.213, the UE may determine, based on the following parameters, to select a specific table:
(1) SSB subcarrier spacing: defined in TS 38.104 and fixed for each frequency band.
(2) RMSI CORESET subcarrier spacing: determined by the SubcarrierSpaceCommon field in the MIB.
(3) Minimum bandwidth of a cell corresponding to a frequency band.

Table 13-1 to Table 13-10 defined in TS38.213 all include five columns of data. A first column is an index (Index), and a second column is a multiplexing pattern of the SSB and CORESET#0. In addition, a value of the index (Index) in Table 13-1 to Table 13-15 may be a value of the four most significant bits in the pdcch-ConfigSIB1 field.

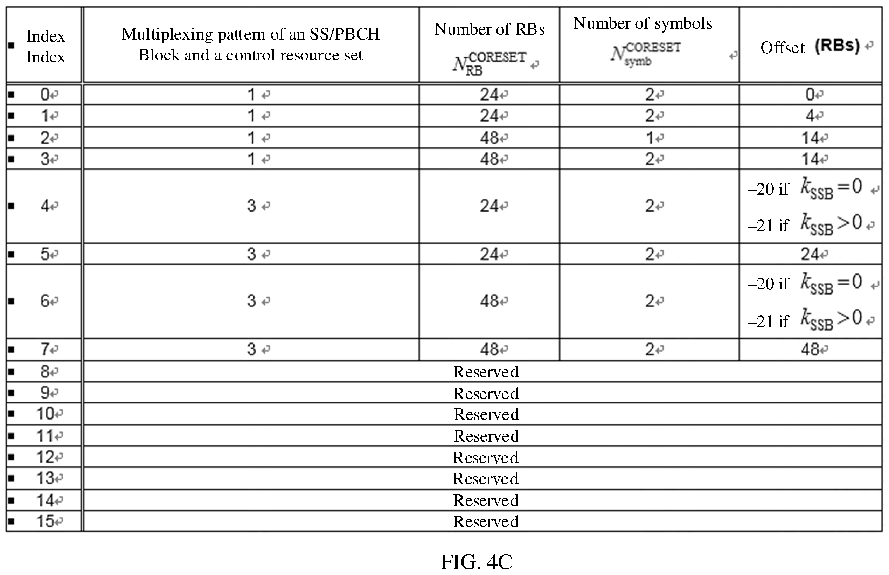

FIG. 4C is a diagram of Table 13-8 defined in TS 38.213. For example, after selecting Table 13-8, the UE may select an index (Index) in the table by using the four most significant bits in pdcch-ConfigSIB1, where a second column in the table is a multiplexing pattern of the SSB and CORESET#0. For example, when the four most significant bits in pdcch-ConfigSIB1 are 1, a data row with index=1 in Table 13-8 is selected, and it is determined that a multiplexing pattern in a second column of the data row is a pattern 1.

Optionally, for the tables from Table 13-11 to Table 13-15 defined in TS 38.213, the UE may determine, based on the following parameters, to select a specific table: a multiplexing pattern of the SSB and CORESET#0, an SSB subcarrier spacing, an RMSI CORSET subcarrier spacing, and a frequency range (such as FR1 or FR2).

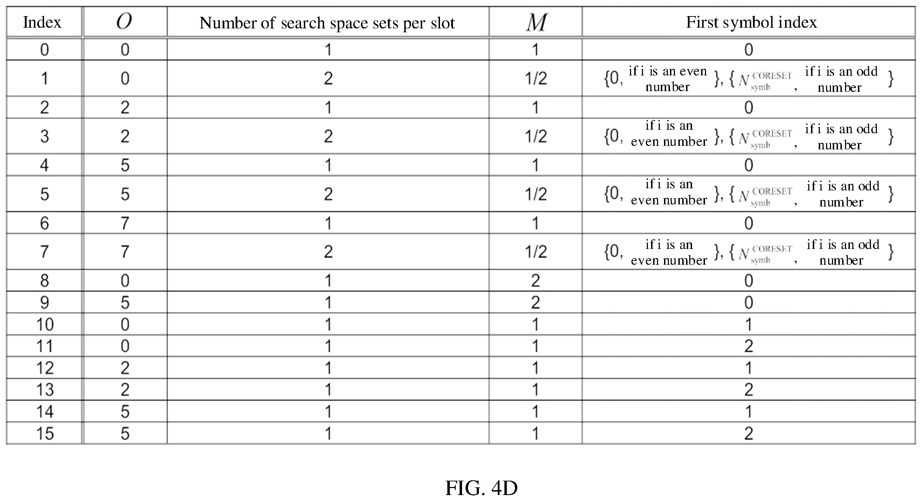

Table 13-11 to Table 13-15 defined in TS38.213 all include five columns of data. A first column is an index (Index). In addition, a value of the index (Index) in Table 13-11 to Table 13-15 may be a value of the four least significant bits in the pdcch-ConfigSIB1 field. FIG. 4D is a diagram of Table 13-11 in TS 38.213. For example, after selecting Table 13-11, the UE may select an index (Index) in the table by using the four least significant bits in pdcch-ConfigSIB1. For example, when the four least significant bits in pdcch-ConfigSIB1 are 1, a data row with index=1 in Table 13-11 is selected.

Next, based on the communication system shown in FIG. 2A, a communication method provided in this application is described.

### Embodiment 1

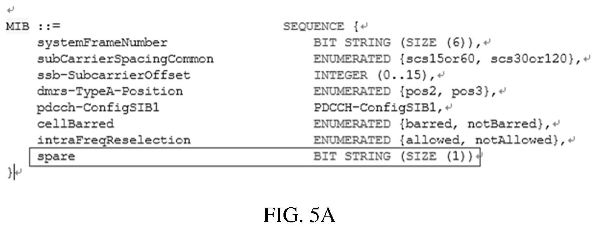

In this embodiment of this application, a first bit in an MIB of an SSB may be used as first identification information, and the first identification information indicates whether an SIB1 is an on-demand signal. FIG. 5A is a diagram of content of the MIB of the SSB. Currently, there is one unused bit in the MIB, for example, a "spare" bit in the MIB shown in FIG. 5A is not used. In this case, the one bit may indicate whether an SIB1 of a network device in which a current SSB is located is an on-demand signal. For example, a value of a spare field in the MIB is 1, that is, the MIB in FIG. 5A includes "spare BIT STRING ((SIZE (1))", indicating that the SIB1 sent by a network device in which the current SSB is located is an on-demand signal. In addition, a value of a spare field in the MIB is 0, that is, the MIB includes "spare BIT STRING ((SIZE (0))", indicating that the SIB1 sent by the network device in which the current SSB is located is an always-on signal.

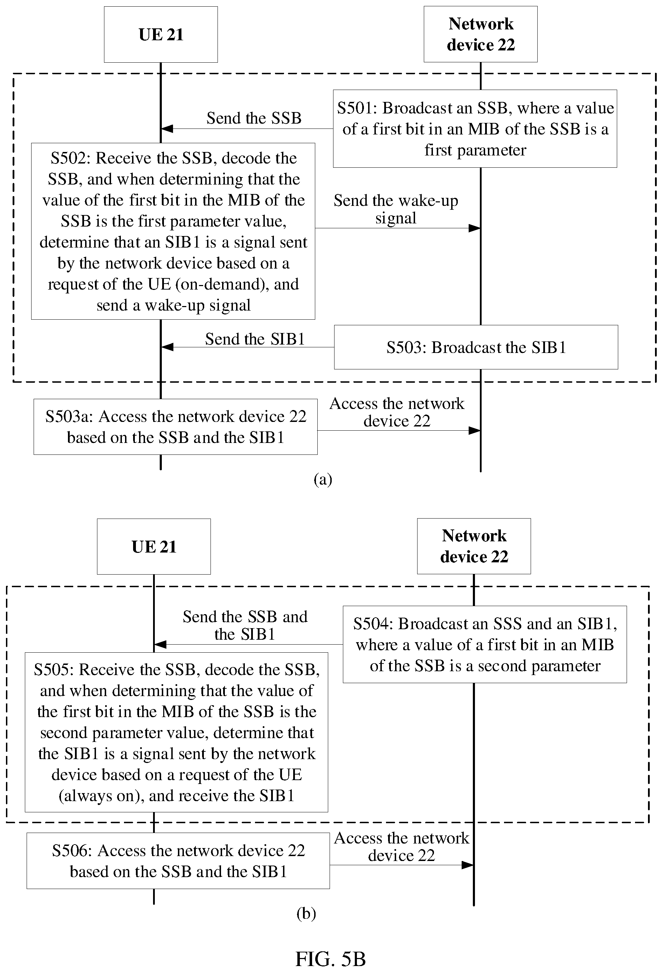

(a) in FIG. 5B is a schematic flowchart of a communication method according to an embodiment of this application. The method includes the following steps.

S501: A network device 22 broadcasts an SSB, where a value of a first bit in an MIB of the SSB is a first parameter.

Optionally, the network device 22 may broadcast the SSB on the cell 20 shown in FIG. 2A, so that when located in the cell 20, a UE 2 may receive the SSB broadcast by the network device 22.

In some other embodiments, the SSB may alternatively be requested by the UE to be sent by the network device 22. For example, the SSB may send a wake-up signal (wake up signal, WUS) to the UE 21, so that the network device 22 can start broadcasting the SSB after receiving the WUS. Herein, the SSB broadcast by the network device 22 may be directionally sent to the UE 21, to reduce energy consumption.

S502: The UE 21 receives the SSB, decodes the SSB, and when determining that the value of the first bit in the MIB of the SSB is the first parameter value, determines that an SIB1 is a signal sent by the network device based on a request of the UE (on-demand), and sends the wake-up signal to the network device 22.

Optionally, the first bit is spare. For example, the first parameter value is 1, but is not limited thereto. In this case, the SIB1 sent by the network device 22 is an on-demand signal.

It may be understood that spare is an existing bit in the MIB. During actual application, in this application, the existing spare bit may be used, for example, a new name onDemandRmsi may be defined for the spare bit, and the spare bit may be set as the first bit in the MIB, to indicate whether there is the SIB1 after the SSB. In this case, a value of the bit onDemandRmsi in the MIB is a first parameter value (for example, 1), indicating that the SIB1 is an on-demand signal. Correspondingly, a value of the bit onDemandRmsi in the MIB is a second parameter value (for example, 0), indicating that the SIB1 is an always-on signal.

S503: The network device 22 broadcasts the SIB1, that is, sends the SIB1 to the UE 2 based on the received wake-up signal.

Correspondingly, the UE 21 may decode the SIB1 based on the received SSB.

Optionally, the network device 22 may directionally broadcast the SIB1 to the UE 21 based on the WUS, or send the SIB1 a preset number of times.

Optionally, a field may be set in the WUS to indicate the WUS to request to wake up the network device to send the SIB1. The field may be a spare field in the WUS, but is not limited thereto.

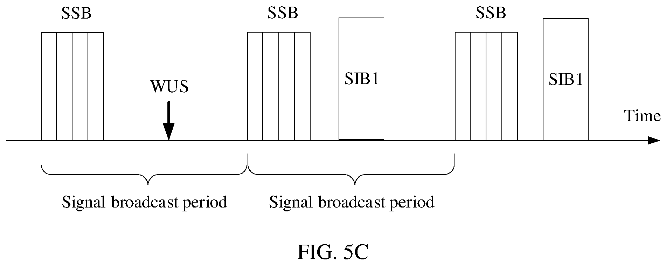

FIG. 5C shows a time sequence diagram in which the network device 22 broadcasts the SSB, and after the UE 21 sends the WUS, the network device 22 broadcasts the SIB1 in a signal broadcast period. In this case, before receiving the WUS, the network device 22 sends the SSB in each signal broadcast period, and after receiving the WUS, the network device 22 sends the SSB and the SIB1 in each signal broadcast period.

S503a: The UE 21 accesses the network device 22 based on the SSB and the SIB1.

Optionally, the UE 21 may access the network device 22 based on the received SSB and/or SIB1, for example, may access the cell 20 in which the access network device 22 is located.

(b) in FIG. 5B is a schematic flowchart of a communication method according to an embodiment of this application. The method includes the following steps.

S504: A network device 22 broadcasts an SSB and an SIB1, where a value of a first bit in an MIB of the SSB is a second parameter value. In this case, a UE 21 is located in a cell 20 in which the network device 22 is located, and receives the SIB1 periodically sent by the network device 22.

Optionally, the network device 22 may first broadcast the SSB and then broadcast the SIB1, and there is usually a short time interval between broadcasts of the two signals.

For example, the second parameter value is 0. For example, a value of a bit onDemandRmsi in the MIB is 0. In this case, it indicates that the SIB1 sent by the network device 22 is an always-on signal.

Optionally, the UE 21 may periodically receive and decode the SIB1 broadcast by the network device 22 on each beam. In addition, for a time sequence diagram of the SSB and the SIB1, refer to FIG. 1D, that is, there is the SSB and the SIB1 in each signal broadcast period.

S505: The UE 2 receives the SSB, decodes the SSB, and when determining that the value of the first bit in the MIB of the SSB is the second parameter value, determines that the SIB1 is a signal periodically sent by the network device (always on), and receives the SIB1 sent by the network device 22. In this case, the UE 2 may decode the SIB1 based on the SSB.

S506: The UE 21 accesses the network device 22 based on the SSB and the SIB1.

Optionally, the UE 21 may access the network device 22 based on the received SSB and/or SIB1, for example, may access the cell 20 in which the access network device 22 is located.

In this case, after receiving the SSB and the SIB1, the UE 21 can perform downlink synchronization based on a PSS and an SSS in the SSB, and can further decode information in the SIB1 based on MIB information in the SSB, to obtain configuration information required for accessing the network device 22, so that the UE 21 can access the network device 22 based on the configuration information obtained through decoding, and further establish a connection, for example, a radio resource control (radio resource control, RRC) connection, to the network device 22.

In this case, in this application, whether the SIB1 is an on-demand signal is indicated by using the first bit in the SSB, thereby preventing the network device from periodically sending the SIB1, and implementing network energy saving. In addition, after obtaining the SSB and determining that the SIB1 is an on-demand signal, the UE may avoid periodically receiving and decoding the SIB1 on each beam, thereby helping the UE quickly access a network.

### Embodiment 2

In an embodiment of this application, first identification information may be carried in a resource element (resource element, RE) in which a PBCH in an MIB of an SSB is located, and the first identification information indicates whether an SIB1 is an on-demand signal.

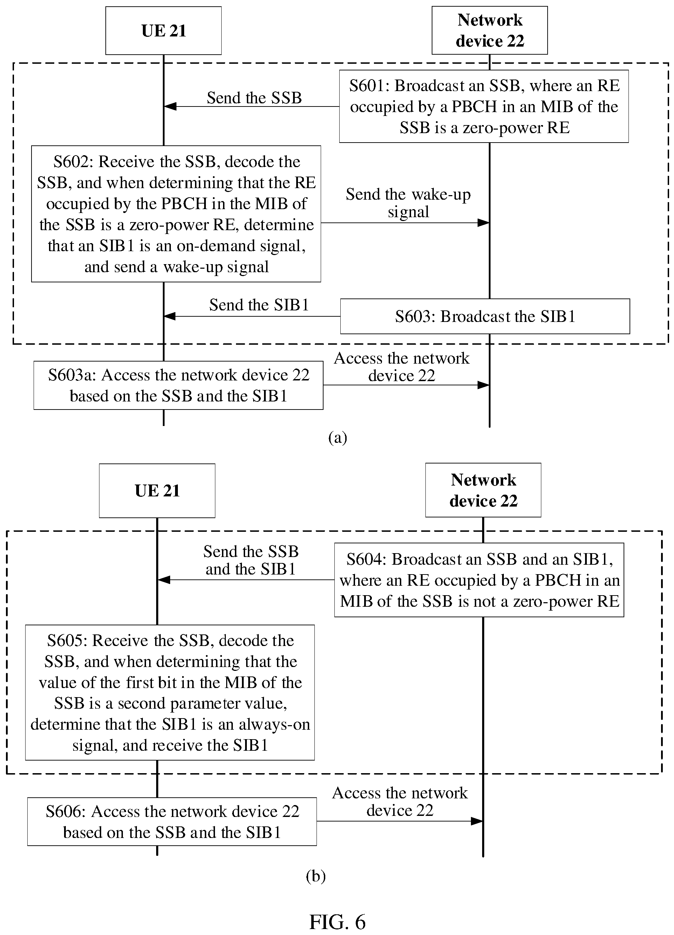

(a) in FIG. 6 is a schematic flowchart of a communication method according to an embodiment of this application. The method includes the following steps.

S601: A network device 22 broadcasts an SSB, where an RE occupied by a PBCH in an MIB of the SSB is a zero-power RE.

Optionally, the network device 22 may broadcast the SSB on a cell 20 shown in FIG. 2A, so that when located in the cell 20, a UE 2 may receive the SSB broadcast by the network device 22.

S602: The UE 2 receives the SSB, decodes the SSB, and when determining that the RE occupied by the PBCH in the MIB of the SSB is a zero-power RE, determines that an SIB1 is an on-demand signal, and sends a wake-up signal to the network device 22.

As shown in FIG. 1B, first identification information is carried in an RE other than REs of a PSS and an SSS in the SSB, or carried in the RE occupied by the PBCH. For example, when the RE other than the REs of the PSS and the SSS in the SSB is a zero-power RE, or the RE occupied by the PBCH is a zero-power RE, it indicates that a subsequent SIB1 is an on-demand signal. In this case, the PSS and the SSS are only used by the UE in the cell to perform downlink synchronization with the network device such as a base station. On the contrary, when the RE other than the REs of the PSS and the SSS in the SSB is not a zero-power RE, or the RE occupied by the PBCH is not a zero-power RE, it indicates that a subsequent SIB1 is an always-on signal.

It may be understood that REs being zero-power REs usually indicates that these REs are not used to transmit valid data signals.

S603: The network device 22 broadcasts the SIB1, that is, broadcasts the SIB1 based on the received wake-up signal. Specifically, the wake-up signal may indicate to wake up the network device 22 to broadcast the SIB1.

For example, for a time sequence diagram of the SSB and the SIB1, refer to FIG. 5C.

S606a: The UE 21 accesses the network device 22 based on the SSB and the SIB1.

Optionally, the UE 21 may access the network device 22 based on the received SSB and/or SIB1, for example, may access the cell 20 in which the access network device 22 is located.

(b) in FIG. 6 is a schematic flowchart of a communication method according to an embodiment of this application. The method includes the following steps.

S604: A network device 22 broadcasts an SSB and an SIB1, where an RE occupied by a PBCH in an MIB of the SSB is not a zero-power RE.

In this case, the SIB1 sent by the network device 22 is an always-on signal. Then, a UE 21 may periodically receive and decode the SIB1 of the network device 22 on each beam. In this case, for a time sequence diagram of the SSB and the SIB1, refer to FIG. 1D.

S605: The UE 21 receives the SSB, decodes the SSB, and when determining that the RE occupied by the PBCH in the MIB of the SSB is not a zero-power RE, determines that the SIB1 is an always-on signal, and receives the SIB1 sent by the network device 22.

It may be understood that S601 to S603 may be performed in parallel with S604 and S605, and after S603 and S605 are performed in the method, the following S606 may be performed.

S606: The UE 21 accesses the network device 22 based on the SSB and the SIB1.

Optionally, the UE 21 may access the network device 22 based on the received SSB and/or SIB1, for example, may access a cell 20 in which the access network device 22 is located.

In this case, in this application, whether the SIB1 is an on-demand signal is indicated by using power of the RE of the PBCH in the MIB of the SSB, thereby implementing network energy saving and allowing the UE to quickly access a network.

### Embodiment 3

In an embodiment of this application, a DRS signal may be broadcast to indicate that an SIB1 is an on-demand signal.

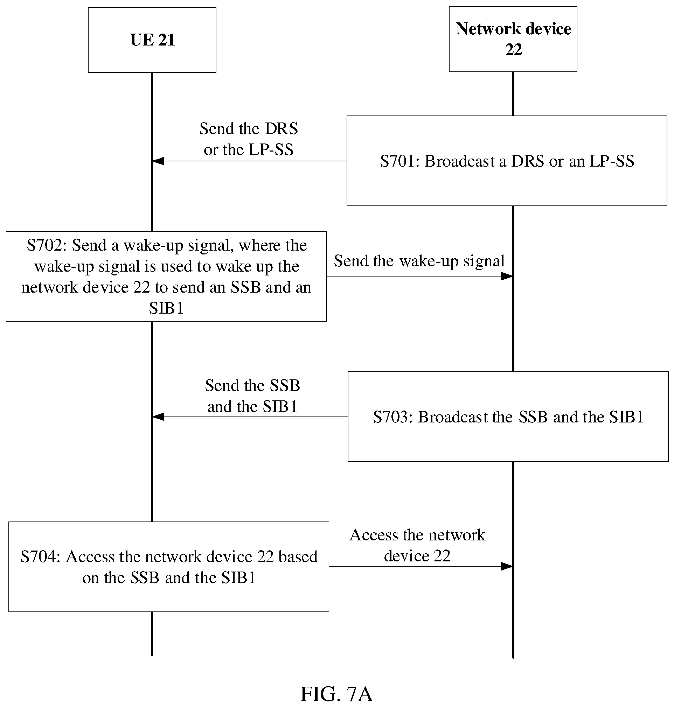

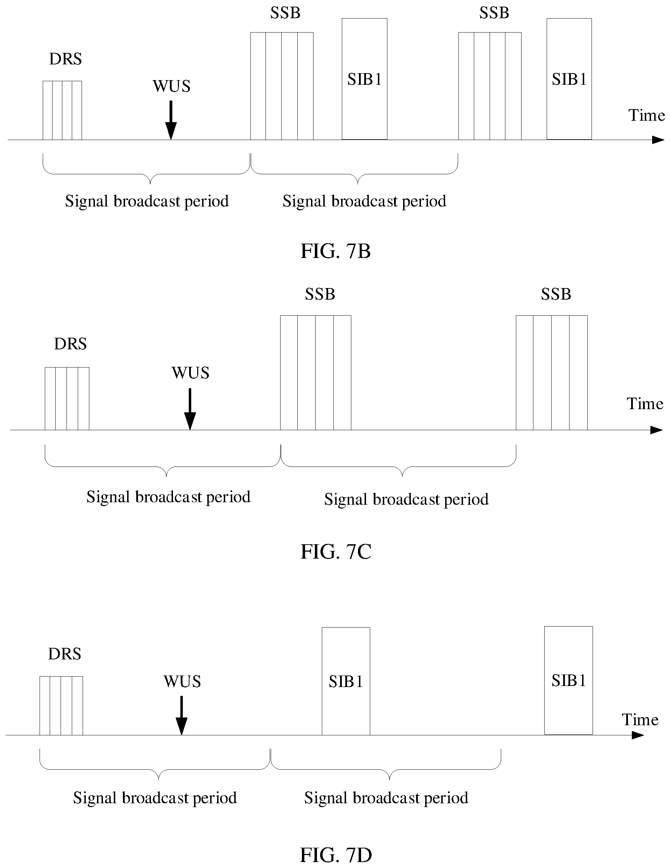

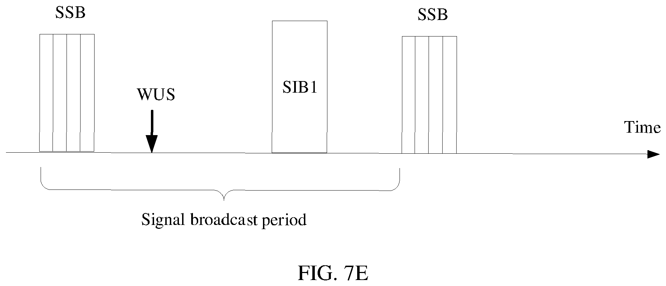

FIG. 7 is a schematic flowchart of a communication method according to an embodiment of this application. The method includes the following steps.

S701: A network device 22 broadcasts a DRS or an LP-SS.

Optionally, the network device 22 may broadcast the DRS on the cell 20 shown in FIG. 2A, so that when located in the cell 20, a UE 2 may receive the DRS broadcast by the network device 22. The UE may synchronize with the network device based on the DRS, which is specifically downlink synchronization.

Optionally, the network device 22 may broadcast the LP-SS on the cell 20 shown in FIG. 2A, so that when located in the cell 20, the UE 2 may receive the LP-SS broadcast by the network device 22. That is, the UE 21 within signal coverage can perform downlink synchronization with the network device 22 based on the received low power synchronization signal (low power synchronization signal, LP-SS).

In this embodiment, the network device 22 may send the DRS at low power consumption, specifically, may broadcast the DRS. In this case, the UE 21 that is within signal coverage of the network device 22 and in an idle (idle) or inactive (inactive) state can synchronize with the network device 22 by using the DRS, which may be specifically downlink synchronization.

The DRS sent by the network device 22 may have the following three non-limiting implementations.

In a first implementation example, the DRS may include only a PSS and an SSS. In addition, the DRS may occupy two OFDMs in time domain, where the PSS occupies a first OFDM, and the SSS occupies a second OFDM. In addition, the DRS may occupy 127 subcarriers in frequency domain, and the PSS and the SSS each occupy 127 subcarriers in different time domains. In this embodiment, after receiving the DRS, the UE 21 specifically completes downlink synchronization based on the PSS and the SSS in the DRS.

In addition, in another implementation example, the PSS and the SSS may occupy another number of symbols, may occupy other subcarriers in frequency domain, or the like.

In a second implementation example, the DRS may include the PSS, the SSS, and one or more reserved resource elements (resource element, RE). In this case, the DRS may still occupy two OFDMs in time domain, where the PSS occupies a first OFDM, and the SSS occupies a second OFDM. In addition, the DRS may occupy 127 subcarriers in frequency domain, and the PSS and the SSS each occupy 127 subcarriers in different time domains.

In another implementation example, the PSS and the SSS may occupy another number of symbols, may occupy other subcarriers in frequency domain, or the like. In addition, the RE may occupy another number of subcarriers.

In a third implementation example, the DRS may reuse a structure of an SSB, may include the PSS and the SSS, and may include a PBCH. In this case, the DRS may occupy four OFDMs in time domain, where the PSS occupies a first OFDM, and the SSS occupies a third OFDM. In addition, the DRS may occupy 240 subcarriers in frequency domain, and the PSS and the SSS each occupy 127 subcarriers in different time domains. When sending the DRS, the network device 22 may include MIB information in the PBCH in a manner of sending the SSB. Alternatively, the PBCH in the DRS sent by the network device 22 may not carry any information, for example, an RE in which the PBCH is located is a zero-power RE, so that energy consumption generated when the network device 22 sends data carried on the PBCH can be reduced. In addition, when sending the DRS, the network device 22 does not send an SIB1.

It may be understood that the foregoing four implementations are merely used as examples for description. In another embodiment, the DRS sent by the network device 22 may alternatively be implemented in another manner. For example, the DRS may occupy three or five symbols in time domain. This is not limited herein.

During actual application, the network device 22 may periodically broadcast the DRS. For example, a period may be 20 milliseconds (ms), 40 ms, or the like. This is not limited herein. For ease of description, a period in which the network device 22 sends a signal is referred to as a signal broadcast period in the following.

In a possible implementation, in each signal broadcast period, the network device 22 may separately send the DRS on a plurality of beams. For example, the network device 22 may separately send the DRS on 8 or 64 beams. In addition, the network device 22 may send one or more DRSs on each beam. When sending the DRS on different beams, the network device 22 may use different time domains.

Alternatively, in each signal broadcast period, the network device 22 may send the DRS without distinguishing between beams. In this case, the network device 22 may send one DRS. Alternatively, a network element may send a plurality of DRSs, so that the UE 21 can improve a success rate of decoding the DRSs based on the plurality of DRSs.

Optionally, when one energy saving carrier/cell sends only a DRS discovery reference signal, for example, a carrier in which the network device 22 is located is an energy saving carrier, or the cell in which the network device 22 is located is an energy saving cell, it indicates that both the SSB and the SIB1 are on-demand signals, but not always-on signals.

S702: The UE 21 sends a wake-up signal to the network device, where the wake-up signal may wake up the network device 22 to send the SSB and the SIB1.

Optionally, when determining that a received synchronization signal is the DRS or the LP-SS, the UE 21 may determine that the SIB1 is an on-demand signal.

In some other embodiments, the wake-up signal sent by the UE 21 may wake the network device 22 to send one of the SSB or the SIB1. It may be understood that the network device 22 may select, based on energy consumption of the network device and a request of the UE, specific signals in the SSB and the SIB1 to be broadcast.

S703: The network device 22 broadcasts the SSB and the SIB1. That is, the network device 22 sends the SSB and the SIB1 to the UE 21 based on the received WUS.

When the network device 22 determines that a UE sends a WUS, it indicates that there is currently a UE that needs to access the network device 22. Therefore, the network device 1 changes from a state of broadcasting the DRS at low power consumption to a state of broadcasting the signal at high power consumption, specifically, to a state of broadcasting the SSB and the SIB1 at high power consumption.

In this case, after receiving the SSB and the SIB1, the UE 21 can continue to maintain downlink synchronization based on a PSS and an SSS in the SSB, and can further decode information in the SIB1 based on MIB information in the SSB, to obtain configuration information required for accessing the network device 22, so that the UE 21 can access the network device 1 based on the configuration information obtained through decoding, and further establish a connection, for example, a radio resource control (radio resource control, RRC) connection, to the network device 1.

In a first implementation example, after receiving the WUS, the network device 22 may resume periodically broadcasting the SSB and the SIB1, so that one or more UEs (including the UE 21) within the signal coverage of the network device 22 can access the network device 22 based on the received SSB and SIB1.

In a second implementation example, after receiving the WUS, the network device 22 may broadcast the SSB and the SIB1 in a preset number of signal broadcast periods. For example, the network device 22 may continuously broadcast the SSB and the SIB1 in two signal broadcast periods. After completing broadcasting the SSB and the SIB1 in the preset number of signal broadcast periods, the network device 22 may re-enter a state of broadcasting the DRS at low power consumption, and restart broadcasting the SSB and the SIB1 after the network device 22 receives the WUS again.

A number of times that the network device 22 continuously broadcasts the SSB and the SIB1 may be defined in a standard. Alternatively, when the network device 22 previously broadcasts the DRS, the DRS may carry the number of times that the network device 22 continuously broadcasts the SSB and the SIB1 after receiving the WUS, so that the UE 21 improves a success rate of decoding the signals by continuously receiving the SSB and the SIB1.

FIG. 7B shows a time sequence diagram in which the network device 22 broadcasts the DRS, and after the UE 21 sends the WUS, the network device 22 broadcasts the SSB and the SIB1 in a signal broadcast period. That is, after receiving the WUS, the network device 22 sends the SSB and the SIB1 in each signal broadcast period.

During actual application, in the communication system shown in FIG. 2A, in addition to an implementation corresponding to the time sequence diagram in 7B, there may be another implementation. The following provides some examples for description with reference to accompanying drawings.

Implementation 1: The network device 22 may periodically broadcast the DRS (not broadcast the SSB and the SIB1), and broadcast only the SSB after receiving the WUS sent by the UE 21. FIG. 7C shows a time sequence diagram in which the network device 22 broadcasts the DRS, and after the UE 21 sends the WUS, the network device 22 broadcasts only the SSB in a signal broadcast period. That is, after receiving the WUS, the network device 22 broadcasts only the SSB in each signal broadcast period.

Implementation 2: The network device 22 may periodically broadcast the DRS (not broadcast the SSB and the SIB1), and broadcast only the SIB1 after receiving the WUS sent by the UE 21. FIG. 7D shows a time sequence diagram in which the network device 22 broadcasts the DRS, and after the UE 21 sends the WUS, the network device 22 broadcasts the SIB1 in a signal broadcast period. That is, after receiving the WUS, the network device 22 broadcasts only the SIB1 in each signal broadcast period.

Implementation 3: The network device 22 may periodically broadcast the SSB (not broadcast the SIB1), and broadcast the SIB1 after receiving the WUS sent by the UE 21. FIG. 7E shows a time sequence diagram in which the network element first broadcasts an SSB, and after the UE 21 sends the WUS, the network device 22 broadcasts the SIB1.

S704: The UE 21 accesses the network device 22 based on the SSB and the SIB1.

It should be noted that in this embodiment, an example in which the network device 22 broadcasts the SSB and the SIB1 after the UE 2 sends the WUS is used for description. In another embodiment, after receiving the WUS, the network device 22 may broadcast only the SSB or broadcast only the SIB1. In addition, the UE 2 may access the network device 22 based on the SSB or the SIB1 broadcast by the network device 22. The following provides examples for description.

In a first implementation, after receiving the WUS, the network device 22 may broadcast only the SSB. During specific implementation, the UE 2 may locally pre-store SIB1 information of the network device 22.

In a second implementation, after receiving the WUS, the network device 22 may broadcast only the SIB1. In this case, the UE 2 may locally pre-store MIB information, and a manner of pre-storing the MIB information is not limited in this embodiment.

In this case, in this application, whether the SSB and/or the SIB1 sent by the network device are/is on-demand signals/an on-demand signal may be indicated by using the DRS or the LP-SS. This reduces a resource consumed by the network device for broadcasting the SSB and the SIB1, and avoids a network access delay caused by the UE continuously receiving the SSB and the SIB1.

### Embodiment 4

In an embodiment of in this application, in this application, signaling on a primary cell (primary cell, PCell) in which a primary carrier of a UE is located may be used to indicate whether an SSB and an SIB1 of a secondary cell (secondary cell, SCell) in which a secondary carrier of the UE is located are on-demand signals.

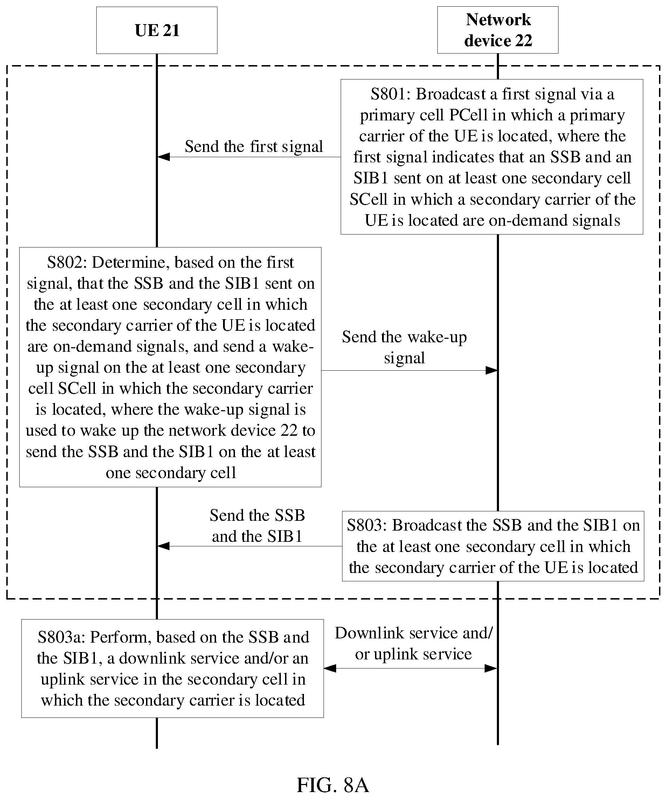

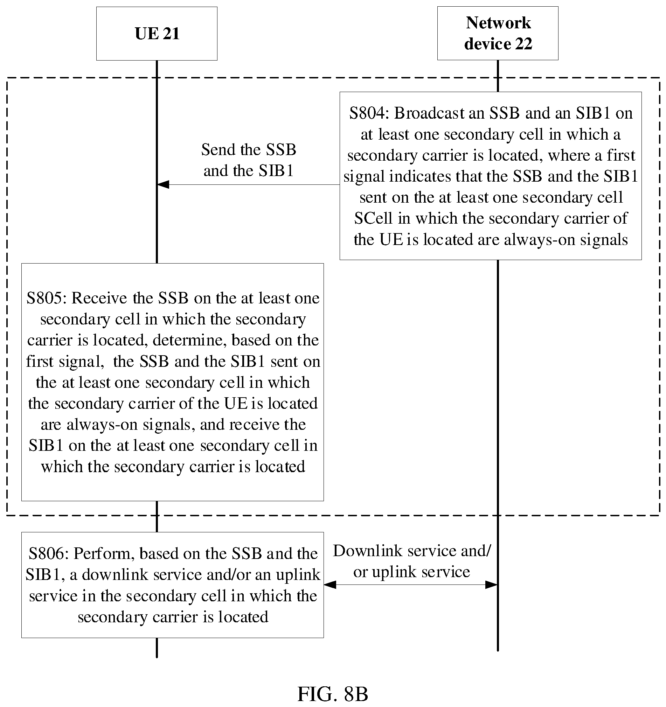

FIG. 8A and FIG. 8B are a schematic flowchart of a communication method according to an embodiment of this application. The method includes the following steps.

S801: A network device 22 broadcasts a first signal via a primary cell PCell in which a primary carrier of a UE is located, where the first signal indicates that an SSB and an SIB1 sent on at least one secondary cell SCell in which a secondary carrier of the UE is located are on-demand signals.

For example, under CA carrier aggregation (carrier aggregation, CA), the secondary cell in which the secondary carrier is located may be an energy saving (energy saving, ES) cell. In this case, the SSB and the SIB on the secondary cell in which the secondary carrier is located may be on-demand signals, reducing network energy consumption.

In a first implementation, the first signal is a system message SIB1 or another system message SIB that is broadcast and sent via the PCell.

Optionally, the first signal includes first domain information. A value of the first domain information is a seventh parameter value (for example, true), and the SIB1 is an on-demand signal. Alternatively, a value of the first domain information is an eighth parameter value (for example, false), and the SIB1 is an always-on signal.

Optionally, the first signal includes second domain information, and the SIB1 is an on-demand signal. Alternatively, the SIB does not include the second domain information, and the SIB1 is an always-on signal. For example, the SIB1 sent on the PCell in which the primary carrier of the UE is located includes the second domain information, for example, a value of the second domain information is true.

For example, in this application, a domain on-demandSib1 ENUMERATED {true} may be added to the SIB1 or the another SIB message broadcast through the primary carrier of the UE. Information about the domain may be the first domain information or the second domain information.

Optionally, an identifier, such as an ID, of the secondary cell may be added before a domain on-demandSib1 ENUMERATED {true} of the first signal. The network device may indicate whether an SSB or an SIB on one or more secondary cells of the UE is an on-demand signal. Each secondary cell corresponds to one domain on-demandSib1 ENUMERATED {true} and an identifier (an ID or an index) of the secondary cell.

Optionally, the first signal indicates that different signals in SSBs and/SIB1 on different SCells of the UE are on-demand signals. For example, the first signal indicates that on an SCell 1 corresponding to an ID 1, an SSB is an always-on signal, and an SIB1 is an on-demand signal. In addition, the first signal indicates that both an SSB and an SIB1 on an SCell 21 corresponding to an ID 2 are on-demand signals.

Optionally, the first signal is dedicated signaling sent by the PCell of the UE in a connected state. For example, the dedicated signaling is radio resource control (RRC) signaling, for example, RRC reconfiguration signaling (RRCReconfiguration).

Optionally, the RRC signaling includes a first information element IE; and a value of the first IE is a ninth parameter value (for example, true), and the SIB1 is an on-demand signal; or a value of the first IE is a tenth parameter value (for example, false), and the SIB1 is an always-on signal.

Optionally, the RRC signaling includes a second information element IE, and the SIB1 is an on-demand signal; or the RRC signaling does not include e the second IE, and the SIB1 is an always-on signal.

For example, in this application, an IE scell-on-demandSib1 ENUMERATED {true} may be added to the RRC reconfiguration signaling, and the IE may be the first IE or the second IE.

S802: The UE 2 determines, based on the first signal, that the SSB and the SIB1 sent on the at least one secondary cell SCell in which the secondary carrier of the UE is located are on-demand signals, and sends a wake-up signal on the at least one secondary cell in which the secondary carrier, where the wake-up signal is used to wake up the network device 22 to broadcast the SSB or the SIB1 on the at least one secondary cell.

Optionally, the UE 2 may wake up the network device on each SCell to send the SSB and/or the SIB1.

Optionally, the primary cell and the secondary cell of the UE may be cells of different network devices, or may be different cells of a same network device. This is not specifically limited in this embodiment of this application. For example, both the primary cell in which the primary carrier is located and the secondary cell in which the secondary carrier is located shown in FIG. 2A may be cells covered by a signal of the network device 22.

In some other embodiments, the wake-up signal sent by the UE 21 may wake the network device 22 to send one of the SSB or the SIB1. It may be understood that the network device 22 may select, based on energy consumption of the network device and a request of the UE, specific signals in the SSB and the SIB1 to be broadcast.

Optionally, corresponding to the SSB being an on-demand signal, the UE sends a first wake-up signal to the network device on the at least one SCell, and the network device may send the SSB on the at least one SCell based on the first wake-up signal.

Optionally, corresponding to the SIB1 being an on-demand signal, a second wake-up signal is sent to the network device on the at least one SCell, and the network device may send the SIB1 on the at least one SCell based on the second wake-up signal.

Optionally, corresponding to both the SSB and the SIB1 being on-demand signals, a third wake-up signal is sent to the network device on the at least one SCell, and the network device may send the SSB and the SIB1 on the at least one SCell based on the third wake-up signal.

For example, assuming that the cell 20 shown in FIG. 2A is the primary cell in which the primary carrier of the UE 21 is located, after the UE 21 receives an SIB1 or another SIB broadcast by the network device 22 on the cell 20, whether the SSB and the SIB on the secondary cell in which the secondary carrier of the UE 2 is located are on-demand signals may be determined. Further, when the network device 22 broadcasts the SSB and the SIB1 on the cell in which the secondary carrier is located, and the UE 2 is in the cell, the UE 2 may receive the SSB and the SIB1 broadcast by the network device 22.

S803: The network device 22 broadcasts the SSB and the SIB1 on the at least one secondary cell in which the secondary carrier is located. That is, the network device 22 broadcasts, based on the wake-up signal, the SSB and the SIB1 on the at least one secondary cell in which the secondary carrier is located.

S803a: The UE 21 performs, based on the SSB and the SIB1, a downlink service and/or an uplink service in the at least one secondary cell in which the secondary carrier is located.

FIG. 8B is a schematic flowchart of a communication method according to an embodiment of this application. The method includes the following steps.

S804: Corresponding to a first signal indicating that an SSB and an SIB1 sent on at least one secondary cell SCell in which a secondary carrier of a UE is located are always-on signals, a network device 22 broadcasts the SSB and the SIB1 on the at least one secondary cell in which the secondary carrier is located.

S805: The UE 21 receives the SSB on the at least one secondary cell in which the secondary carrier is located, determines, based on the first signal, the SSB and the SIB1 sent on the at least one secondary cell SCell in which the secondary carrier of the UE is located are always-on signals, and receives the SIB1 on the at least one secondary cell in which the secondary carrier is located.

It may be understood that S801 to S803 may be performed in parallel with S804 and S805, and after S803 and S805 are performed in the method, the following S606 may be performed.

S806: The UE 21 performs, based on the SSB and the SIB1, a downlink service and/or an uplink service in the at least one secondary cell in which the secondary carrier is located.

Similarly, the descriptions of S801 to S806 are similar to those of S701 to S706, and a difference is only that a network access process in S801 to S806 is applied to a carrier aggregation scenario.

In this case, in this application, whether the SSB and the SIB1 of the secondary cell in which the secondary carrier of the UE is located are on-demand signals may be indicated through signaling in the primary cell in which the primary carrier is located. In this way, the network device can reduce resources occupied by sending the SSB and the SIB1 on the secondary cell, thereby facilitating network energy saving. In addition, this reduces resource cells for receiving and decoding the SSB and the SIB1 on the secondary cell of a UE side, and helps quickly access a network.

### Embodiment 5

In an embodiment of this application, whether an SIB1 is an on-demand signal may be indicated by using a table associated with configuration information in an MIB of an SSB.

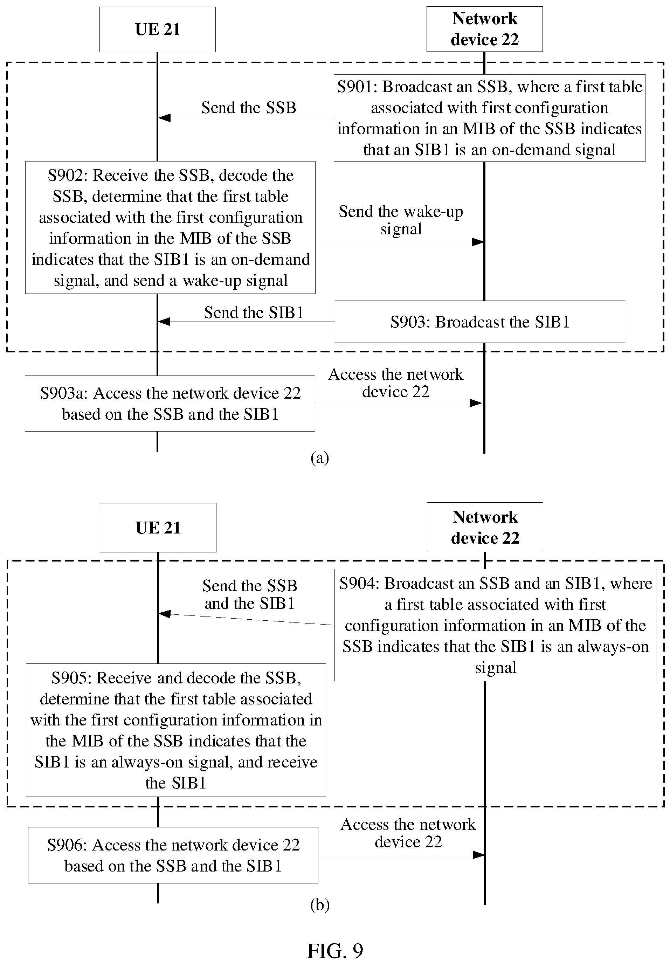

(a) in FIG. 9 is a schematic flowchart of a communication method according to an embodiment of this application. The method includes the following steps.

S901: A network device 22 broadcasts an SSB, where a first table associated with first configuration information in an MIB of the SSB indicates that an SIB1 is an on-demand signal.

The MIB of the SSB includes first configuration information, and the first configuration information is associated with the first table.

Optionally, the first configuration information is SIB1 configuration information (pdcch-ConfigSIB1), and the SIB1 configuration information is used to configure Type0-PDCCH common search space CSS for decoding the SIB1, and is further used to configure a control resource set CORESET for the Type0-PDCCH CSS.

Optionally, the first table is a table corresponding to the Type0-PDCCH CSS, and four most significant bits of the SIB1 configuration information correspond to an index of a data row in the first table. For example, the first table may be Table 13-1 to Table 13-10 defined in TS 38.213.

Optionally, the first table is a table corresponding to the CORESET, and four least significant bits of the SIB1 configuration information correspond to an index of the data row in the first table.

In this application, the first table may indicate whether the SIB1 is an on-demand signal in the following three implementations.

In a first implementation, the first table corresponds to a UE that supports network energy saving NES, and the SIB1 is an on-demand signal. For example, the first table may be a table newly added in a standard (for example, release 19). When the first table is the table corresponding to Type0-PDCCH CSS, the table may be different from Table 13-1 to Table 13-10 defined in TS 38.213. When the first table is the table corresponding to the CORESET, the table may be different from Table 13-11 to Table 13-15 defined in TS38.213.

Alternatively, the first table corresponds to a UE that does not support network energy saving NES, and the SIB1 is an always-on signal. In this case, the first table may be a table included in an existing standard, for example, tables in Table 13-1 to Table 13-10 defined in TS 38.213.

In a second implementation, in this application, a column of data may be newly added to a table defined in the standard, and the newly added data may indicate whether the SIB1 is an on-demand signal.

In an example, the first table includes a first entry; and a value of the first entry in the data row indexed based on the SIB1 configuration information in the first table is a third parameter value (for example, the value is 1), and the SIB1 is an on-demand signal; or a value of the first entry in the data row indexed based on the SIB1 configuration information in the first table is a fourth parameter value (for example, the value is 0), and the SIB1 is an always-on signal.

Optionally, the first entry is a last column in the first table, for example, a data column in a sixth column in Table 13-8 defined in TS38.213.

In a third possible implementation, the data row indexed based on the SIB1 configuration information in the first table is a reserved row, and the SIB1 is an on-demand signal; or the data row indexed based on the SIB1 configuration information in the first table is not a reserved row, and the SIB1 is an always-on signal. That is, the reserved row in the existing table indicates whether the SIB1 is an on-demand signal. For example, when the first table is Table 13-8 defined in TS 38.213, if indexes determined in the SIB1 configuration information are 7 to 15, the data row indexed based on the SIB1 configuration information in the first table is a reserved row. In this case, an SIB1 after a current SSB is an on-demand signal. In addition, when the first table is another table, an index of the reserved row indexed based on the SIB1 configuration information in the first table takes another value. This is not specifically limited herein.

S902: A UE 21 receives the SSB, decodes the SSB, determines that the first table associated with the first configuration information in the MIB of the SSB indicates that the SIB1 is an on-demand signal, and sends wake-up information to the network device.

S903: The network device 22 broadcasts the SIB1, that is, sends the SIB1 based on the received wake-up information.

S903a: The UE 21 accesses the network device 22 based on the SSB and the SIB1.

(b) in FIG. 9 is a schematic flowchart of a communication method according to an embodiment of this application. The method includes the following steps.

S904: Corresponding to a first table associated with first configuration information in an MIB of an SSB indicating that an SIB1 is an always-on signal, a network device 22 broadcasts the SSB and the SIB1.

S905: A UE 21 receives the SSB sent by the network device 22, determines that the first table associated with the first configuration information in the MIB of the SSB indicates that the SIB1 is an always-on signal, and receives the SIB1 sent by the network device 22.

It may be understood that S901 to S903 may be performed in parallel with S904 and S905, and after S903 and S905 are performed in the method, the following S906 may be performed.

S906: The UE 21 accesses the network device 22 based on the SSB and the SIB1.

In this case, in this application, whether the SIB1 is an on-demand signal may be indicated by using the table associated with the configuration information of the MIB of the SSB. This reduces a resource consumed by the network device for broadcasting the SSB and the SIB1, and avoids a network access delay caused by the UE continuously receiving the SSB and the SIB1.

### Embodiment 6

In an embodiment of this application, whether an SIB1 is an on-demand signal may be indicated by using a target parameter associated with configuration information in an MIB of an SSB.

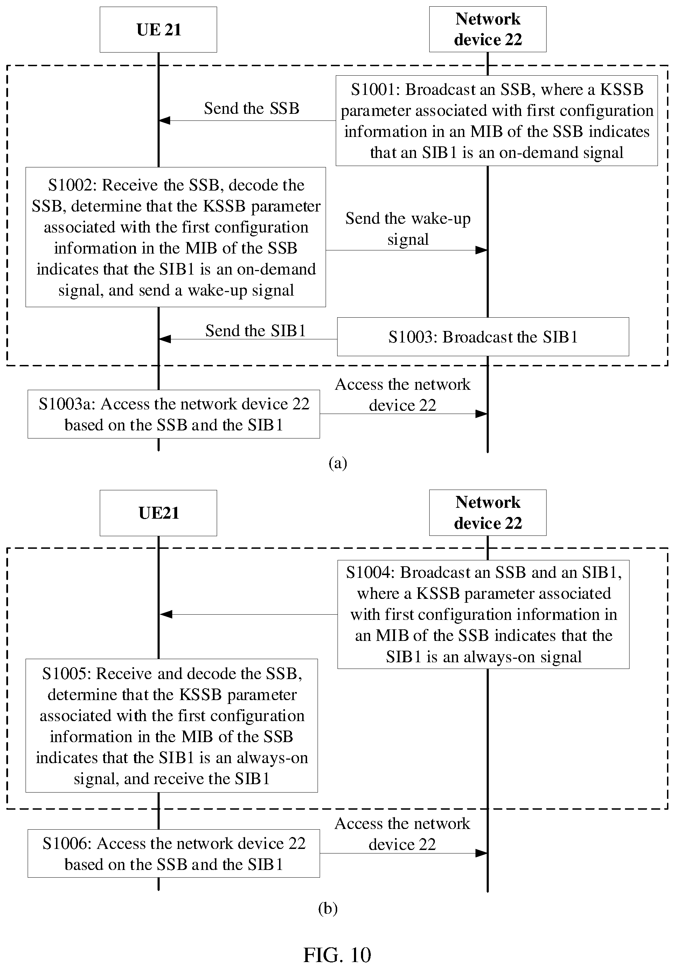

(a) in FIG. 10 is a schematic flowchart of a communication method according to an embodiment of this application. The method includes the following steps.

S1001: A network device 22 broadcasts an SSB, where a k_{SSB} parameter associated with first configuration information in an MIB of the SSB indicates that an SIB1 is an on-demand signal.

The first configuration information in the MIB of the SSB, and the first configuration is associated with a target parameter.

Optionally, the first configuration information is a subcarrier offset in the MIB of the SSB (ssb-SubcarrierOffset), the subcarrier offset is used to calculate the k_{SSB} parameter, and the target parameter is the k_{SSB} parameter. A value of the k_{SSB} parameter is a fifth parameter value, and the SIB1 is an on-demand signal. Alternatively, a value of the k_{SSB} parameter is a sixth parameter value, and the SIB1 is an always-on signal.

It may be understood that the k_{SSB} parameter is further associated with a table, for example, Table 13-16 shown in FIG. 3A. When the value of the k_{SSB} parameter is the fifth parameter value, the fifth parameter value may be a k_{SSB} parameter corresponding to a reserved row in Table 13-16. For example, the fifth parameter value may be 30. Correspondingly, when the value of the k_{SSB} parameter is the sixth parameter value, the sixth parameter value may be a k_{SSB} parameter corresponding to a non-reserved row in Table 13-16, for example, 24 to 29.

S1002: A UE 21 receives the SSB, decodes the SSB, determines that the k_{SSB} parameter associated with the first configuration information in the MIB of the SSB indicates that the SIB1 is an on-demand signal, and sends wake-up information to the network device 22.

S1003: The network device 22 broadcasts the SIB1, that is, broadcasts the SIB1 based on the received wake-up information.

S1003a: The UE 21 accesses the network device 22 based on the SSB and the SIB1.

(b) in FIG. 10 is a schematic flowchart of a communication method according to an embodiment of this application. The method includes the following steps.

S1004: A network device 22 broadcasts an SSB and an SIB1, where a k_{SSB} parameter associated with first configuration information in an MIB of the SSB indicates that the SIB1 is an always-on signal.

S1005: A UE 21 receives the SSB sent by the network device 22, determines that the k_{SSB} parameter associated with the first configuration information in the MIB of the SSB indicates that the SIB1 is an on-demand signal, and receives the SIB1 sent by the network device 22.

It may be understood that S1001 to S1003 may be performed in parallel with S1004 to S1005, and after S1003 and S1005 are performed in the method, the following S1006 may be performed.

S1006: The UE 21 accesses the network device 22 based on the SSB and the SIB1.

In addition, the target parameter provided in this embodiment of this application is not limited to the k_{SSB} parameter, and may be another implementable parameter. This is not specifically limited in this embodiment of this application.

In this case, in this application, whether the SIB1 is an on-demand signal may be indicated by using the k_{SSB} parameter associated with the configuration information of the MIB of the SSB. This reduces a resource consumed by the network device for broadcasting the SSB and the SIB1, and avoids a network access delay caused by the UE continuously receiving the SSB and the SIB1.

Next, based on the communication system shown in FIG. 2B, a communication method provided in this application is described.

### Embodiment 7

In this embodiment of this application, a first bit in an MIB of an SSB may be used as first identification information, and the first identification information indicates whether there is an SIB1 after the SSB, that is, indicates whether a network device sends the SIB1 after sending the SSB. For example, a value of a spare field in the MIB shown in FIG. 5A is 1, that is, the MIB in FIG. 5A includes "spare BIT STRING ((SIZE (1))", indicating that the network device skips sending the SIB1 after sending the SSB. In addition, a value of a spare field in the MIB is 0, that is, the MIB includes "spare BIT STRING ((SIZE (0))", indicating that the network device sends the SIB1 after sending the SSB.

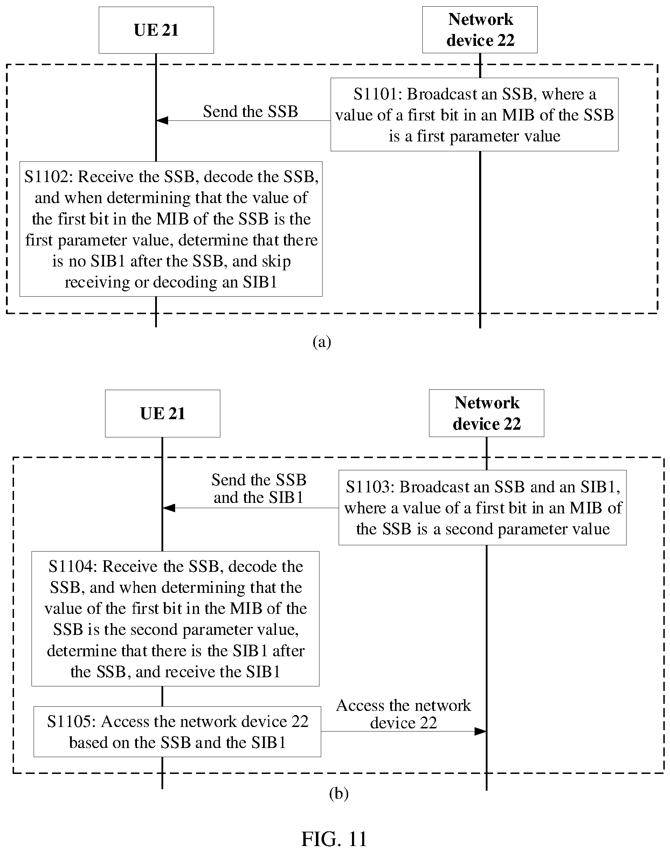

(a) in FIG. 11 is a schematic flowchart of a communication method according to an embodiment of this application. The method includes the following steps.

S1101: A network device 22 broadcasts an SSB, where a value of a first bit in an MIB of the SSB is a first parameter value.

Optionally, the network device 22 may broadcast the SSB on the cell 20 shown in FIG. 2B, so that when located in the cell 20, a UE 2 may receive the SSB broadcast by the network device 22.

In some other embodiments, the SSB may alternatively be requested by the UE to be sent by the network device 22. For example, the SSB may send a wake-up signal (wake up signal, WUS) to the UE 21, so that the network device 22 can start broadcasting the SSB after receiving the WUS. Herein, the SSB broadcast by the network device 22 may be directionally sent to the UE 21, to reduce energy consumption.

S1102: The UE 21 receives the SSB, decodes the SSB, and when determining that the value of the first bit in the MIB of the SSB is the first parameter value, determines that there is no SIB1 after the SSB, and skips receiving or decoding an SIB1.

Optionally, the first bit is spare. For example, the first parameter value is 1, but is not limited thereto. In this case, the network device 22 skips sending the SIB1 after sending the SSB.

It may be understood that spare is an existing bit in the MIB. During actual application, in this application, the existing spare bit may be used, for example, a new name haveRmsi may be defined for the spare bit, and the spare bit may be set as the first bit in the MIB, to indicate whether there is the SIB1 after the SSB. In this case, a value of the bit haveRmsi in the MIB is a first parameter value (for example, 1), indicating that there is no SIB1 after the SSB. Correspondingly, a value of the bit haveRmsi in the MIB is a second parameter value (for example, 0), indicating that there is the SIB1 after the SSB.

In some other embodiments, when the MIB of the SSB received by the UE 2 includes the first bit, and the first bit indicates that there is no SIB1 after the SSB, the UE 2 may further request the network device 22 to send the SIB1. For example, after determining that the first bit in the MIB of the SSB indicates that there is no SIB1 after the SSB, the UE may send a wake-up signal (WUS) to the network device. Further, the network device 22 may send the SIB1 to the UE 21 based on the received wake-up signal, for example, may directionally broadcast the SIB1 to the UE 2.

S1103: The network device 22 broadcasts the SSB and the SIB1, where a value of the first bit in the MIB of the SSB is the second parameter value. In this case, as shown in FIG. 2B, the UE 21 is located in the cell 23 in which the network device 22 is located, and receives the SIB1 periodically sent by the network device 22.

For example, the second parameter value is 0. For example, a value of the bit haveRmsi in the MIB is 0. In this case, it indicates that the network device 22 sends the SIB1 after sending the SSB. In this case, the UE 21 may periodically receive and decode the SIB1 of the network device 22 on each beam. In this case, for a time sequence diagram of the SSB and the SIB1, refer to FIG. 1D.

(b) in FIG. 11 is a schematic flowchart of a communication method according to an embodiment of this application. The method includes the following steps.

S1104: A UE 21 receives an SSB, decodes the SSB, and when determining that a value of a first bit in an MIB of the SSB is a second parameter value, determines that there is an SIB1 after the SSB, and receives the SIB1 sent by a network device 22.

S1105: The UE 21 accesses the network device 22 based on the SSB and the SIB1.

It may be understood that S1101 and S1102 may be performed in parallel with S1103 to S1105. For detailed descriptions of steps S1101 to S1105, refer to the related descriptions of S501 to S506 in FIG. 5B. Details are not described in this embodiment of this application.

A difference is only that the first bit in the MIB of the SSB in S1101 to S1105 indicates whether there is the SIB1 after the SSB.

In this case, in this application, whether there is the SIB1 after the SSB is indicated by using a first bit in the SSB, thereby preventing the network device from periodically sending the SIB1, and implementing network energy saving. In addition, after obtaining the SSB and determining that there is no SIB1 after the SSB, the UE may avoid periodically receiving an SIB1 on each beam, thereby helping quickly access a network.

### Embodiment 8

In an embodiment of this application, first identification information may be carried in an RE in which a PBCH in an MIB of an SSB is located, and whether there is an SIB1 after the SSB is indicated by using the first identification information.

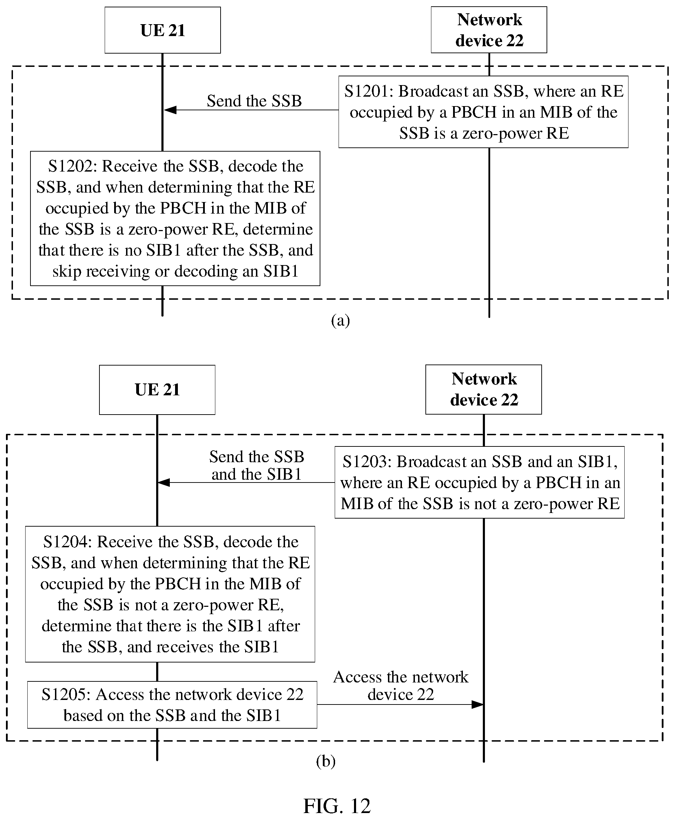

(a) in FIG. 12 is a schematic flowchart of a communication method according to an embodiment of this application. The method includes the following steps.

S1201: A network device 22 broadcasts an SSB, where an RE occupied by a PBCH in an MIB of the SSB is a zero-power RE.

Optionally, the network device 22 may broadcast the SSB on the cell 23 shown in FIG. 2B, so that when located in the cell 23, a UE 2 may receive the SSB broadcast by the network device 22.

S1202: The UE 21 receives the SSB, decodes the SSB, and when determining that the RE occupied by the PBCH in the MIB of the SSB is a zero-power RE, determines that there is no SIB1 after the SSB, and skips receiving or decoding an SIB1. In this case, the network device 22 skips sending the SIB1 after sending the SSB, that is, there is no SIB1 after the SSB.

In some other embodiments, when the RE occupied by the PBCH in the MIB of the SSB received by the UE 2 is a zero-power RE, indicating that there is no SIB1 after the SSB, the UE 2 may further request the network device 22 to send the SIB1. For example, after the UE sends a wake-up signal (WUS) to the network device, the network device 22 may send the SIB1 to the UE 21 based on the received wake-up signal, for example, may directionally broadcast the SIB1 to the UE 2. For example, after the UE 2 initiates the WUS, for a time sequence diagram of the SSB and the SIB1, refer to FIG. 5C.

(b) in FIG. 12 is a schematic flowchart of a communication method according to an embodiment of this application. The method includes the following steps.

S1203: A network device 22 broadcasts an SSB and an SIB1, where an RE occupied by a PBCH in an MIB of the SSB is not a zero-power RE.

In this case, the network device 22 sends the SIB1 after sending the SSB. Then, a UE 21 may periodically receive and decode the SIB1 of the network device 22 on each beam. In this case, for a time sequence diagram of the SSB and the SIB1, refer to FIG. 1D.

S1204: The UE 2 receives the SSB, decodes the SSB, and when determining that the RE occupied by the PBCH in the MIB of the SSB is not a zero-power RE, determines that there is the SIB1 after the SSB, and receives the SIB1 sent by the network device 22.

S1205: The UE 21 accesses the network device 22 based on the SSB and the SIB1.

It may be understood that S1201 and S1202 may be performed in parallel with S1203 to S1205. For detailed descriptions of steps S1201 to S1205, refer to the related descriptions of S601 to S606 in FIG. 6. Details are not described in this embodiment of this application.

A difference is only that the RE occupied by the PBCH in the MIB of the SSB in S1201 to S1205 indicates whether there is the SIB1 after the SSB.

In this case, in this application, whether there is the SIB1 after the SSB is indicated by using power of the RE of the PBCH in the MIB of the SSB, thereby implementing network energy saving and allowing the UE to quickly access a network.

### Embodiment 9

In an embodiment of this application, whether there is an SIB1 after an SSB may be indicated by using a table associated with configuration information in an MIB of the SSB.

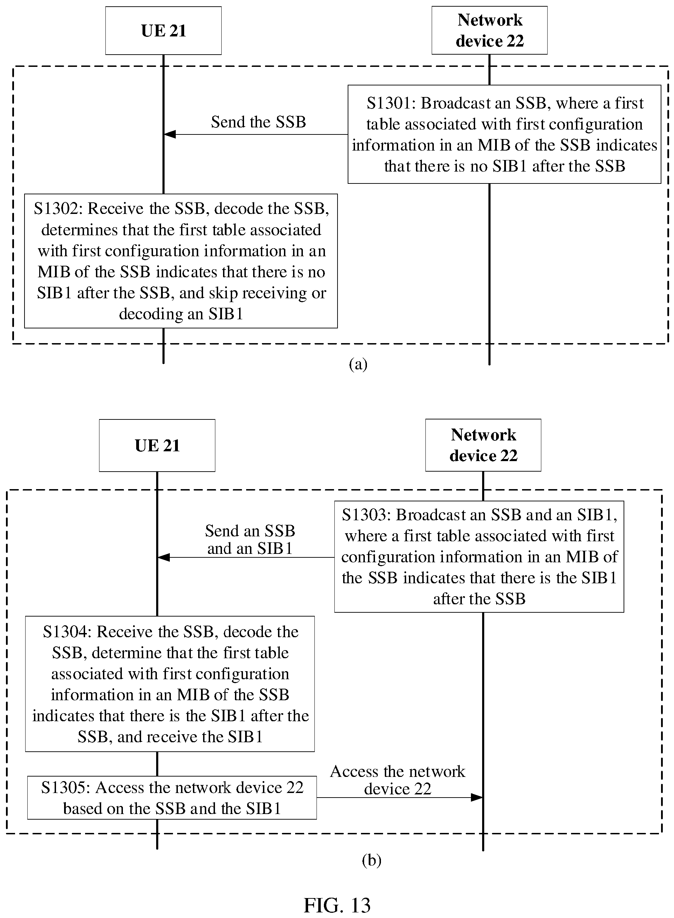

(a) in FIG. 13 is a schematic flowchart of a communication method according to an embodiment of this application. The method includes the following steps.

S1301: A network device 22 broadcasts an SSB, where a first table associated with first configuration information in an MIB of the SSB indicates that there is no SIB1 after the SSB.

The MIB of the SSB includes first configuration information, and the first configuration information is associated with the first table.

Optionally, the first configuration information is SIB1 configuration information (pdcch-ConfigSIB1), and the SIB1 configuration information is used to configure Type0-PDCCH common search space CSS for decoding an SIB1, and is further used to configure a control resource set CORESET for the Type0-PDCCH CSS.

Optionally, the first table is a table corresponding to the Type0-PDCCH CSS, and four most significant bits of the SIB1 configuration information correspond to an index of a data row in the first table. For example, the first table may be Table 13-1 to Table 13-10 defined in TS 38.213.

Optionally, the first table is a table corresponding to the CORESET, and four least significant bits of the SIB1 configuration information correspond to an index of the data row in the first table.

In this application, the first table may indicate whether there is the SIB1 after the SSB in the following three implementations.

In a first implementation, the first table corresponds to a UE that supports network energy saving NES, indicating that there is no SIB1 after the SSB. For example, the first table may be a table newly added in a standard (for example, release 19). When the first table is the table corresponding to Type0-PDCCH CSS, the table may be different from Table 13-1 to Table 13-10 defined in TS 38.213. When the first table is the table corresponding to the table corresponding to the CORESET, the table may be different from Table 13-11 to Table 13-15 defined in TS38.213.

Alternatively, the first table corresponds to a UE that does not support network energy saving NES, indicating that there is the SIB1 after the SSB. In this case, the first table may be a table included in an existing standard, for example, tables in Table 13-1 to Table 13-10 defined in TS 38.213.

In a second implementation, in this application, a column of data may be newly added to a table defined in the standard, and the newly added data may indicate whether there is the SIB1 after the SSB.

In an example, the first table includes a first entry; and a value of the first entry in the data row indexed based on the SIB1 configuration information in the first table is a third parameter value (for example, the value is 1), and there is the SIB1 after the SSB; or a value of the first entry in the data row indexed based on the SIB1 configuration information in the first table is a fourth parameter value (for example, the value is 0), and there is no SIB1 after the SSB.

Optionally, the first entry is a last column in the first table, for example, a data column in a sixth column in Table 13-8 defined in TS38.213.

In a third possible implementation, the data row indexed based on the SIB1 configuration information in the first table is a reserved row, and there is no SIB1 after the SSB; or the data row indexed based on the SIB1 configuration information in the first table is not a reserved row, and there is the SIB1 after the SSB. That is, the reserved row in the existing table indicates that there is the SIB1 after the SSB. For example, when the first table is Table 13-8 defined in TS 38.213, if indexes determined in the SIB1 configuration information are 7 to 15, the data row indexed based on the SIB1 configuration information in the first table is a reserved row. In this case, there is no SIB1 after a current SSB. In addition, when the first table is another table, an index of the reserved row indexed based on the SIB1 configuration information in the first table takes another value. This is not specifically limited herein.

S1302: A UE 21 receives the SSB, decodes the SSB, determines that the first table associated with first configuration information in the MIB of the SSB indicates that there is no SIB1 after the SSB, and skips receiving or decoding the SIB1.

It may be understood that, when there is no SIB1 after the SSB, the UE skips receiving or decoding the SIB1, resulting in no resource consumption.

In some other embodiments, when the UE 2 determines that the first table associated with first configuration information in the MIB of the SSB indicates that there is no SIB1 after the SSB, the UE 2 may further request the network device 22 to send the SIB1. For example, the UE may send a wake-up signal (WUS) to the network device. Further, the network device 22 may send the SIB1 to the UE 21 based on the received wake-up signal, for example, may directionally broadcast the SIB1 to the UE 2.

(b) in FIG. 13 is a schematic flowchart of a communication method according to an embodiment of this application. The method includes the following steps.

S1303: A network device 22 broadcasts an SSB and an SIB1, where a first table associated with first configuration information in an MIB of the SSB indicates that there is the SIB1 after the SSB.

S1304: A UE 21 receives the SSB, decodes the SSB, determines that the first table associated with first configuration information in the MIB of the SSB indicates that there is the SIB1 after the SSB, and receives the SIB1 sent by the network device 22.

S1305: The UE 21 accesses the network device 22 based on the SSB and the SIB1.

It may be understood that S1301 and S1302 may be performed in parallel with S1303 to S1305. For related descriptions of S1301 to S1305 in this application, refer to the descriptions of S901 to S906 in FIG. 9. Details are not described in this embodiment of this application.

In this case, in this application, whether there is an SIB1 after the SSB can be indicated by using the table associated with the configuration information in the MIB of the SSB. This reduces a resource consumed by the network device for broadcasting the SSB and the SIB1, and avoids a network access delay caused by the UE continuously receiving the SSB and the SIB1.

### Embodiment 10

In an embodiment of this application, whether there is an SIB1 after an SSB may be indicated by using a target parameter associated with configuration information in an MIB of the SSB.

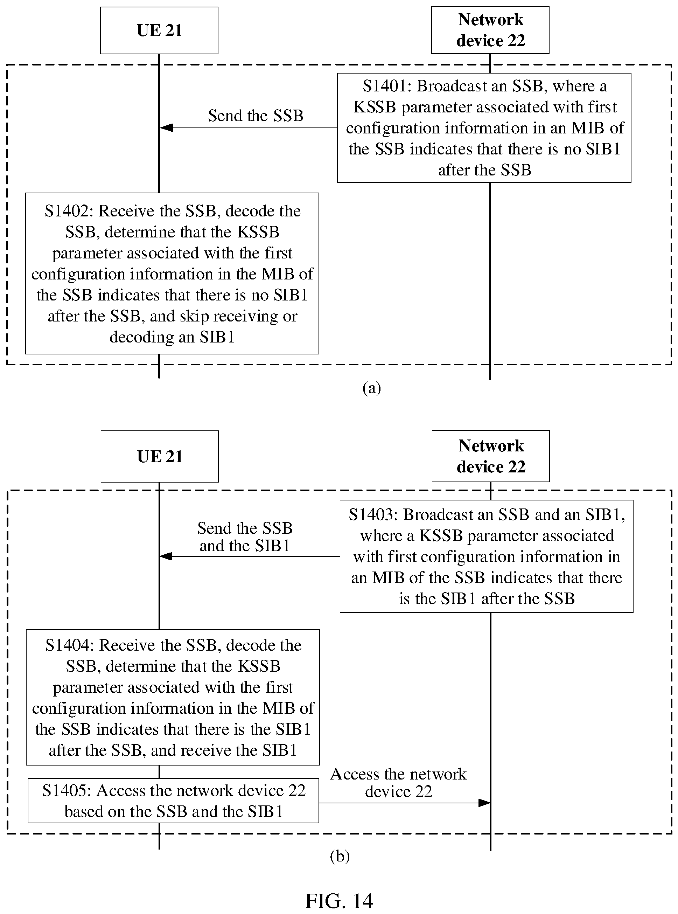

(a) in FIG. 14 is a schematic flowchart of a communication method according to an embodiment of this application. The method includes the following steps.

S1401: A network device 22 broadcasts an SSB, where a k_{SSB} parameter associated with first configuration information in an MIB of the SSB indicates that there is no SIB1 after the SSB.

The first configuration information in the MIB of the SSB, and the first configuration is associated with a target parameter.

Optionally, the first configuration information is a subcarrier offset in the MIB of the SSB (ssb-SubcarrierOffset), the subcarrier offset is used to calculate the k_{SSB} parameter, and the target parameter is the k_{SSB} parameter. A value of the k_{SSB} parameter is a fifth parameter value, and a UE does not need to receive an SIB1 after receiving the SSB; or a value of the k_{SSB} parameter is a sixth parameter value, and the UE needs to receive an SIB1 after receiving the SSB.

It may be understood that the k_{SSB} parameter is further associated with a table, for example, Table 13-16 shown in FIG. 3A. When the value of the k_{SSB} parameter is the fifth parameter value, the fifth parameter value may be a k_{SSB} parameter corresponding to a reserved row in Table 13-16. For example, the fifth parameter value may be 30. Correspondingly, when the value of the k_{SSB} parameter is the sixth parameter value, the sixth parameter value may be a k_{SSB} parameter corresponding to a non-reserved row in Table 13-16, for example, 24 to 29.

S1402: The UE 21 receives the SSB, decodes the SSB, determines that the k_{SSB} parameter associated with the first configuration information in the MIB of the SSB indicates that there is no SIB1 after the SSB, and skips receiving or decoding the SIB1.

In some other embodiments, when the UE 2 determines that the target parameter associated with the first configuration information in the MIB of the SSB indicates that there is no SIB1 after the SSB, the UE 2 may further request a network device 22 to send the SIB1. For example, the UE may send a wake-up signal (WUS) to the network device. Further, the network device 22 may send the SIB1 to the UE 21 based on the received wake-up signal, for example, may directionally broadcast the SIB1 to the UE 2.

(b) in FIG. 14 is a schematic flowchart of a communication method according to an embodiment of this application. The method includes the following steps.

S1403: A network device 22 broadcasts an SSB and an SIB1, where a k_{SSB} parameter associated with first configuration information in an MIB of the SSB indicates that there is the SIB1 after the SSB.

S1404: A UE 21 receives the SSB, decodes the SSB, determines that the k_{SSB} parameter associated with the first configuration information in the MIB of the SSB indicates that there is the SIB1 after the SSB, and receives the SIB1 sent by the network device 22.

S1405: The UE 21 accesses the network device 22 based on the SSB and the SIB1.

It may be understood that S1401 and S1402 may be performed in parallel with S1403 to S1405. For related descriptions of S1402 to S1405 in this application, refer to the descriptions of S1002 to S1006 in FIG. 10. Details are not described in this embodiment of this application.

In addition, the target parameter provided in this embodiment of this application is not limited to the k_{SSB} parameter, and may be another implementable parameter. This is not specifically limited in this embodiment of this application.

In this case, in this application, whether there is an SIB1 after the SSB can be indicated by using the k_{SSB} parameter associated with the configuration information in the MIB of the SSB. This reduces a resource consumed by the network device for broadcasting the SSB and the SIB1, and avoids a network access delay caused by the UE continuously receiving the SSB and the SIB1.

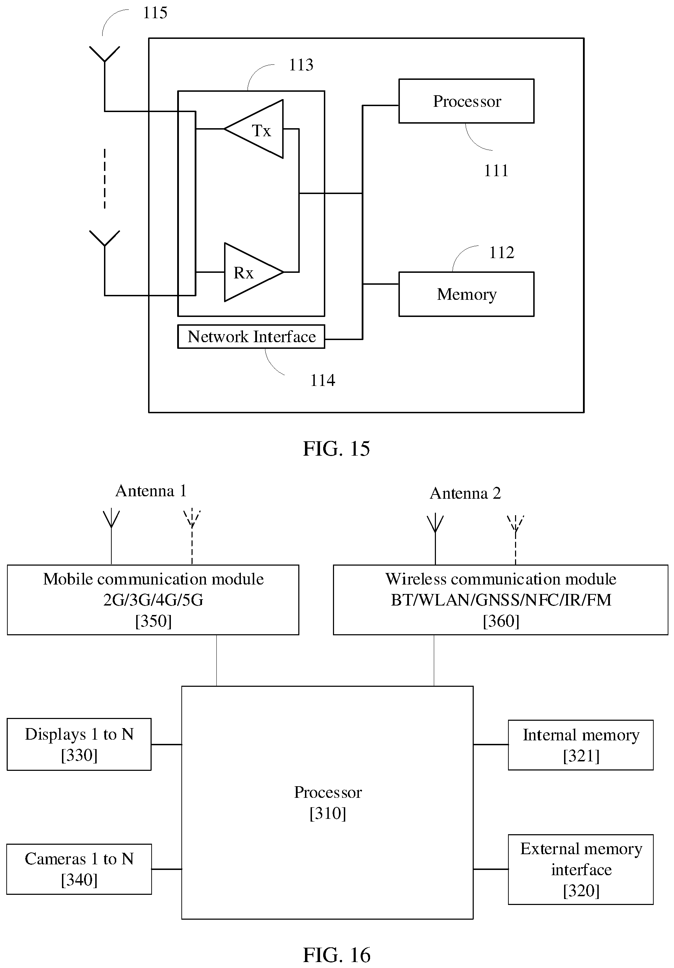

With reference to FIG. 15 and FIG. 16, the following further describes hardware implementations of a network device and a UE.

FIG. 15 is a diagram of a hardware structure of a network device. The network device shown in FIG. 15 includes at least one processor 111, at least one memory 112, at least one transceiver 113, at least one network interface 114, and one or more antennas 115. The processor 111, the memory 112, the transceiver 113, and the network interface 114 are connected, for example, through a bus. In this embodiment of this application, the connection may include various interfaces, transmission lines, buses, or the like. This is not limited in this embodiment. The antenna 115 is connected to the transceiver 113. The network interface 114 is configured to enable the network device to connect to another communication device through a communication link. For example, the network interface 114 may include a network interface between the network device and a network device in a core network, for example, an S1 interface. The network interface may include a network interface between the network device and another network device, for example, an X2 or an Xn interface.

The processor 111 shown in FIG. 15 may specifically complete an action performed by the network device in the foregoing methods. The memory 112 may complete a storing action in the foregoing methods. The transceiver 113 and the antenna 115 may perform receiving and sending actions in new radio in the foregoing methods. The network interface 114 may complete an action of interacting with the network device or another network device in the foregoing methods.

The processor in this embodiment of this application, such as the processor 111, may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores for executing software instructions to perform operations or processing. The processor may be a separate semiconductor chip, or may be integrated with another circuit on one semiconductor chip. For example, the processor may be combined with the another circuit (such as a codec circuit, a hardware acceleration circuit, or various bus and interface circuits) to form an SoC (system on chip). Alternatively, the processor may be integrated within an ASIC as a built-in processor of the ASIC, and the ASIC incorporating the processor may be packaged separately or packaged together with the another circuit. In addition to a core configured to execute the software instructions to perform an operation or processing, the processor may further include a necessary hardware accelerator, such as a field programmable gate array (field programmable gate array, FPGA), a programmable logic device (programmable logic device, PLD), or a logic circuit that implements a special logic operation.

The memory in this embodiment of this application may include at least one of the following types: a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmabler-only memory, EEPROM). In some scenarios, the memory may be a compact disc read-only memory (compact disc read-only memory, CD-ROM) or another compact disc storage, an optical disc storage (including a compressed optical disc, a laser disc, an optical disc, a digital versatile optical disc, a Blu-ray disc, or the like), a magnetic disk storage medium or another magnetic storage device, or any other medium that can be configured to carry or store expected program code in the form of an instruction or a data structure and that can be accessed by a computer, but is not limited thereto.

The memory 112 may exist independently, and is connected to the processor 111. Optionally, the memory 112 and the processor 111 may be integrated, for example, integrated within one chip. The memory 112 can store program code for performing the technical solution in embodiments of this application, and is controlled and executed by the processor 111. Various types of executed computer program code may also be considered as drive programs of the processor 111. For example, the processor 111 is configured to execute computer program code stored in the memory 112 to implement the technical solution in embodiments of this application.

The transceiver 113 may be configured to support receiving or sending of a radio frequency signal between the network device and another device, and the transceiver 113 may be connected to the antenna 115. The transceiver 113 may include a transmitter Tx and a receiver Rx. Specifically, the one or more antennas 115 may receive a radio frequency signal. The receiver Rx of the transceiver 113 is configured to receive the radio frequency signal from the antenna, convert the radio frequency signal into a digital baseband signal or a digital intermediate frequency signal, and provide the digital baseband signal or the digital intermediate frequency signal for the processor 111, so that the processor 111 further processes the digital baseband signal or the digital intermediate frequency signal, for example, performs demodulation processing and decoding processing. In addition, the transmitter Tx of the transceiver 113 is further configured to receive a modulated digital baseband signal or digital intermediate frequency signal from the processor 111, convert the modulated digital baseband signal or digital intermediate frequency signal into a radio frequency signal, and send the radio frequency signal through the one or more antennas 115. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

FIG. 16 is a composition example of a UE according to an embodiment of this application. The UE may be, for example, a mobile phone, or an intelligent wearable device (for example, a smartwatch). The following uses the mobile phone as an example. The UE may include a processor 310, an external memory interface 320, an internal memory 321, a display 330, a camera 340, an antenna 1, an antenna 2, a mobile communication module 350, a wireless communication module 360, and the like.

It may be understood that the structure illustrated in this embodiment does not constitute a specific limitation on the UE. In some other embodiments, the UE may include more or fewer components than those shown in the figure, or some components may be combined, or some components may be split, or there may be a different component layout. The components shown in the figure may be implemented by hardware, software, or a combination of software and hardware.

The processor 310 may include one or more processing units. For example, the processor 310 may include an application processor (Application Processor, AP), a modem processor, a Graphics Processing unit (graphics processing unit, GPU), an image signal processor (Image Signal Processor, ISP), a controller, a video codec, a digital signal processor (Digital Signal Processor, DSP), a baseband processor, a neural-network processing unit (neural-network processing unit, NPU), and/or the like. Different processing units may be independent devices, or may be integrated into one or more processors.

It may be understood that an interface connection relationship between the modules illustrated in embodiments is merely illustrative descriptions, and does not constitute a limitation on a structure of the UE. In some other embodiments of this application, the UE may alternatively use an interface connection manner different from that in the foregoing embodiment, or use a combination of a plurality of interface connection manners.

The external memory interface 320 may be configured to be connected to an external storage card, for example, a micro SD card, to extend a storage capability of the UE. The external memory card communicates with the processor 310 through the interface 320 for external memory, to implement a data storage function. For example, files such as music and videos are stored in the external storage card.

The internal memory 321 may be configured to store computer-executable program code. The executable program code includes instructions. The processor 310 executes various functional applications of the UE and data processing by running instructions stored in the internal memory 321. The internal memory 321 may include a program storage area and a data storage area. The program storage area may store an operating system, an application required by at least one function (for example, a sound playback function or an image playback function), and the like. The data storage area may store data (for example, videostream data) and the like created during use of the UE. In addition, the internal memory 321 may include a high-speed random access memory, and may also include a non-volatile memory, such as at least one magnetic disk storage device, a flash memory device, and a universal flash storage (universal flash storage, UFS). The processor 310 runs instructions stored in the internal memory 321 and/or instructions stored in the memory disposed in the processor, to perform various functions and data processing of the UE.

A wireless communication function of the UE may be implemented via the antenna 1, the antenna 2, the mobile communication module 350, the wireless communication module 360, the modem processor, the baseband processor, and the like.

The antenna 1 and the antenna 2 are configured to transmit or receive an electromagnetic wave signal. Each antenna in the UE may be configured to cover one or more communication frequency bands. Different antennas may be further multiplexed, to improve antenna utilization. For example, the antenna 1 may be multiplexed as a diversity antenna for a wireless local area network. In some other embodiments, the antennas may be used in combination with a tuning switch.

The mobile communication module 350 can provide a wireless communication solution that is applied to the UE and that includes 2G/3G/4G/5G, or the like. The mobile communication module 350 may include at least one filter, a switch, a power amplifier, a low noise amplifier (LNA), and the like. The mobile communication module 350 may receive an electromagnetic wave by using the antenna 1, perform processing such as filtering and amplification on the received electromagnetic wave, and transmit the electromagnetic wave to the modem processor for demodulation. The mobile communication module 350 may further amplify a signal modulated by the modem processor, convert an amplified signal into an electromagnetic wave by using the antenna 1 for radiation. In some embodiments, at least some functional modules in the mobile communication module 350 may be disposed in the processor 310. In some embodiments, at least some of the function modules of the mobile communication module 350 and at least some of modules of the processor 310 may be disposed in a same component.

In some embodiments, the UE initiates or receives a call request by using the mobile communication module 350 and the antenna 1.

In addition, an operating system runs on the foregoing components, for example, an iOS operating system, an Android operating system, or a Windows operating system. An application may be installed and run in the operating system. It may be clearly understood by a person skilled in the art that, for convenience and brevity of description, for explanations and beneficial effects of related content in any UE provided above, refer to the corresponding method embodiments provided above. Details are not described herein.

In addition, an embodiment of this application further provides a computer-readable storage medium. The computer-readable storage medium stores instructions. When the instructions are run on one or more computing devices, the one or more computing devices are enabled to perform the communication methods in the foregoing embodiments.

In addition, an embodiment of this application further provides a computer program product. When the computer program product is executed by one or more computing devices, the one or more computing devices perform any one of the foregoing communication methods. The computer program product may be a software installation package. When any one of the foregoing communication methods needs to be used, the computer program product may be downloaded and executed on a computer.

Based on the descriptions of the foregoing implementations, a person skilled in the art may clearly understand that this application may be implemented by software in addition to necessary universal hardware, and certainly may be alternatively implemented by dedicated hardware, including a dedicated integrated circuit, a dedicated CPU, a dedicated memory, a dedicated component, and the like. Generally, any functions that may be performed by a computer program can be easily implemented by using corresponding hardware. Moreover, a specific hardware structure used to achieve the same function may be of various forms, for example, an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

In the foregoing embodiments, all or some of the foregoing embodiments may be implemented by using software, hardware, firmware, or any combination thereof. When software is used to implement the foregoing embodiments, all or some of the foregoing embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

System architectures and service scenarios described in embodiments of this application are intended to more clearly describe the technical solutions in embodiments of this application, but are not intended to limit the technical solutions provided in embodiments of this application. A person of ordinary skill in the art may know that as the network architectures evolve and a new service scenario emerges, the technical solutions provided in embodiments of this application are also applicable to a similar technical problem.

## Claims

1. A communication method, applied to a user equipment UE, wherein the method comprises:
receiving a synchronization signal/physical broadcast channel block SSB that is sent by a network device, wherein the SSB comprises first identification information; and
determining, based on the first identification information, that a system information block SIB1 is a signal periodically sent by the network device, or a signal sent by the network device based on a request of the UE.

2. The method according to claim 1, wherein the method further comprises:
corresponding to the SIB1 being the signal periodically sent by the network device, receiving the SIB1 periodically sent by the network device; or
corresponding to the SIB1 being the signal sent by the network device based on the request of the UE, sending a wake-up signal to the network device, and receiving the SIB1 sent by the network device based on the wake-up signal.

3. The method according to claim 1 or 2, wherein the first identification information is a first bit in a master information block MIB of the SSB; and
a value of the first bit is a first parameter value, and the SIB1 is the signal sent by the network device based on the request of the UE; or
a value of the first bit is a second parameter value, and the SIB1 is the signal periodically sent by the network device.

4. The method according to claim 3, wherein the first bit is a spare spare bit.

5. The method according to claim 1 or 2, wherein the first identification information is carried in a resource element RE in which a physical broadcast channel PBCH in the SSB is located; and
the RE in which the PBCH is located is a zero-power RE, and the SIB1 is the signal sent by the network device based on the request of the UE; or
the RE in which the PBCH is located is not a zero-power RE, and the SIB1 is the signal periodically sent by the network device.

6. A communication method, applied to a user equipment UE, wherein the method comprises:
receiving a synchronization signal/physical broadcast channel block SSB that is sent by a network device, and first configuration information in a master information block MIB of the SSB, wherein the first configuration information is associated with a first table or a target parameter; and
determining, based on the first table or the target parameter, that a system information block SIB1 is a signal periodically sent by the network device or a signal sent by the network device based on a request of the UE.

7. The method according to claim 6, wherein
corresponding to the SIB1 being the signal periodically sent by the network device, receiving the SIB1 periodically sent by the network device; or
corresponding to the SIB1 being the signal sent by the network device based on the request of the UE, sending a wake-up signal to the network device, and receiving the SIB1 sent by the network device based on the wake-up signal.

8. The method according to claim 6 or 7, wherein the first configuration information is SIB1 configuration information, and the SIB1 configuration information is used to configure Type0-PDCCH common search space CSS for decoding the SIB1, and is further used to configure a control resource set CORESET for the Type0-PDCCH CSS; and
the first table is a table corresponding to the Type0-PDCCH CSS, and four most significant bits of the SIB1 configuration information correspond to an index of a data row in the first table;
or
the first table is a table corresponding to the CORESET, and four least significant bits of the SIB1 configuration information correspond to an index of the data row in the first table.

9. The method according to any one of claims 6 to 8, wherein
the first table corresponds to a UE that supports network energy saving NES, and the SIB1 is the signal sent by the network device based on the request of the UE;
or
the first table corresponds to a UE that does not support network energy saving NES, and the SIB1 is the signal periodically sent by the network device.

10. The method according to any one of claims 6 to 8, wherein the first table comprises a first entry; and
a value of the first entry in the data row indexed based on the SIB1 configuration information in the first table is a third parameter value, and the SIB1 is the signal sent by the network device based on the request of the UE;
or
a value of the first entry in the data row indexed based on the SIB1 configuration information in the first table is a fourth parameter value, and the SIB1 is the signal periodically sent by the network device.

11. The method according to any one of claims 6 to 8, wherein
the data row indexed based on the SIB1 configuration information in the first table is a reserved row, and the SIB1 is the signal sent by the network device based on the request of the UE;
or
the data row indexed based on the SIB1 configuration information in the first table is not a reserved row, and the SIB1 is the signal periodically sent by the network device.

12. The method according to claim 6 or 7, wherein the first configuration information is a subcarrier offset in the MIB of the SSB, the subcarrier offset is used to calculate a k_SSB parameter, and the target parameter is the k_SSB parameter; and
a value of the k_SSB parameter is a fifth parameter value, and the SIB1 is the signal sent by the network device based on the request of the UE;
or
a value of the k_SSB parameter is a sixth parameter value, and the SIB1 is the signal periodically sent by the network device.

13. A communication method, applied to a user equipment UE, wherein the method comprises:
receiving a first signal via a primary cell PCell in which a primary carrier of the UE is located; and
determining, based on the first signal, that a synchronization signal/physical broadcast channel block SSB and/or system information SIB1 that are/is sent on at least one secondary cell SCell in which a secondary carrier of the UE is located are/is signals/a signal periodically sent by the network device or signals/a signal sent by the network device based on a request of the UE.

14. The method according to claim 13, wherein
corresponding to the SSB being the signal sent by the network device based on the request of the UE, sending a first wake-up signal to the network device on the at least one SCell, and receiving the SSB sent by the network device on the at least one SCell based on the first wake-up signal;
corresponding to the SIB1 being the signal sent by the network device based on the request of the UE, sending a second wake-up signal to the network device on the at least one SCell, and receiving the SIB1 sent by the network device on the at least one SCell based on the second wake-up signal; or
corresponding to both the SSB and the SIB1 being the signals sent by the network device based on the request of the UE, sending a third wake-up signal to the network device on the at least one SCell, receiving the SSB and the SIB1 sent by the network device on the SCell based on the third wake-up signal.

15. The method according to claim 13 or 14, wherein the first signal is a system message SIB1 or another system message SIB that is broadcast and sent via the PCell.

16. The method according to claim 15, wherein the first signal comprises first domain information; and
a value of the first domain information is a seventh parameter value, and the SIB1 is the signal sent by the network device based on the request of the UE;
or
a value of the first domain information is an eighth parameter value, and the SIB1 is the signal periodically sent by the network device.

17. The method according to claim 15, wherein
the first signal comprises second domain information, and the SIB1 is the signal sent by the network device based on the request of the UE;
or
the first signal does not comprise the second domain information, and the SIB1 is the signal periodically sent by the network device.

18. The method according to claim 13 or 14, wherein the first signal is dedicated signaling sent by the PCell of the UE in a connected state.

19. The method according to claim 18, wherein the dedicated signaling is radio resource control RRC signaling.

20. The method according to claim 19, wherein the RRC signaling comprises a first information element IE; and
a value of the first IE is a ninth parameter value, and the SIB1 is the signal sent by the network device based on the request of the UE;
or
a value of the first IE is a tenth parameter value, and the SIB1 is the signal periodically sent by the network device.

21. The method according to claim 19, wherein
the RRC signaling comprises a second information element IE, and the SIB1 is the signal sent by the network device based on the request of the UE;
or
the RRC signaling does not comprise the second IE, and the SIB1 is the signal periodically sent by the network device.

22. A communication method, applied to a user equipment UE, wherein the method comprises:
receiving a second reference signal sent by a network device, wherein the second reference signal is used for synchronization with the network device; and
corresponding to the second reference signal being a discovery reference signal DRS signal or a low power synchronization signal LP-SS, determine that a sent synchronization signal/physical broadcast channel block SSB and/or a sent system message SIB1 are/is signals/a signal sent by the network device based on a request of the UE.

23. The method according to claim 22, wherein the method further comprises:
corresponding to the SSB being the signal sent by the network device based on the request of the UE, sending a first wake-up signal to the network device, and receiving the SSB sent by the network device based on the first wake-up signal;
corresponding to the SIB1 being the signal sent by the network device based on the request of the UE, sending a second wake-up signal to the network device, and receiving the SIB1 sent by the network device based on the second wake-up signal; or
corresponding to the SSB and the SIB1 being the signals sent by the network device based on the request of the UE, sending a third wake-up signal to the network device, receiving the SSB and the SIB1 sent by the network device based on the third wake-up signal.

24. The method according to claim 22 or 23, wherein the DRS comprises a primary synchronization signal PSS and a secondary synchronization signal SSS.

25. A communication method, applied to a network device, wherein the method comprises:
sending a synchronization signal/physical broadcast channel block SSB, wherein the SSB comprises first identification information, and the first identification information indicates that a system information block SIB1 sent by the network device is a signal periodically sent by the network device or a signal sent by the network device based on a request of a user equipment UE.

26. The method according to claim 25, wherein the method further comprises:
corresponding to the SIB1 being the signal periodically sent by the network device, periodically sending the SIB1; or
corresponding to the SIB1 being the signal sent by the network device based on the request of the UE, receiving a wake-up signal sent by the user equipment UE, and sending the SIB1 to the UE based on the wake-up signal.

27. The method according to claim 25 or 26, wherein the first identification information is a first bit in a master information block MIB of the SSB; and
a value of the first bit is a first parameter value, and the SIB1 is the signal sent by the network device based on the request of the UE; or
a value of the first bit is a second parameter value, and the SIB1 is the signal periodically sent by the network device.

28. The method according to claim 27, wherein the first bit is a spare spare bit.

29. The method according to claim 25 or 26, wherein the first identification information is carried in a resource element RE in which a physical broadcast channel PBCH in the SSB is located; and
the RE in which the PBCH is located is a zero-power RE, and the SIB1 is the signal sent by the network device based on the request of the UE; or
the RE in which the PBCH is located is not a zero-power RE, and the SIB1 is the signal periodically sent by the network device.

30. A communication method, applied to a network device, wherein the method comprises:
sending a synchronization signal/physical broadcast channel block SSB, and first configuration information in a master information block MIB of the SSB, wherein the first configuration information is associated with a first table or a target parameter, and the first table and the target parameter indicate that a system information block SIB1 sent by the network device is a signal periodically sent by the network device or a signal sent by the network device based on a request of a user equipment UE.

31. The method according to claim 30, wherein
corresponding to the SIB1 being the signal periodically sent by the network device, periodically sending the SIB1; or
corresponding to the SIB1 being the signal sent by the network device based on the request of the UE, receiving a wake-up signal sent by the user equipment UE, and sending the SIB1 based on the wake-up signal.

32. The method according to claim 30 or 31, wherein the first configuration information is SIB1 configuration information, and the SIB1 configuration information is used to configure Type0-PDCCH common search space CSS for decoding the SIB1, and is further used to configure a control resource set CORESET for the Type0-PDCCH CSS; and
the first table is a table corresponding to the Type0-PDCCH CSS, and four most significant bits of the SIB1 configuration information correspond to an index of a data row in the first table;
or
the first table is a table corresponding to the CORESET, and four least significant bits of the SIB1 configuration information correspond to an index of a data row in the first table.

33. The method according to any one of claims 30 to 32, wherein
the first table corresponds to a UE that supports network energy saving NES, and the SIB1 is the signal sent by the network device based on the request of the UE;
or
the first table corresponds to a UE that does not support network energy saving NES, and the SIB1 is the signal periodically sent by the network device.

34. The method according to any one of claims 30 to 32, wherein the first table comprises a first entry; and
a value of the first entry in the data row indexed based on the SIB1 configuration information in the first table is a third parameter value, and the SIB1 is the signal sent by the network device based on the request of the UE;
or
a value of the first entry in the data row indexed based on the SIB1 configuration information in the first table is a fourth parameter value, and the SIB1 is the signal periodically sent by the network device.

35. The method according to any one of claims 30 to 32, wherein
the data row indexed based on the SIB1 configuration information in the first table is a reserved row, and the SIB1 is the signal sent by the network device based on the request of the UE;
or
the data row indexed based on the SIB1 configuration information in the first table is not a reserved row, and the SIB1 is the signal periodically sent by the network device.

36. The method according to claim 30 or 31, wherein the first configuration information is a subcarrier offset in the MIB of the SSB, the subcarrier offset is used to calculate a k_SSB parameter, and the target parameter is the k_SSB parameter; and
a value of the k_SSB parameter is a fifth parameter value, and the SIB1 is the signal sent by the network device based on the request of the UE;
or
a value of the k_SSB parameter is a sixth parameter value, and the SIB1 is the signal periodically sent by the network device.

37. A communication method, applied to a network device, wherein the method comprises:
sending a first signal on a primary cell PCell in which a primary carrier of a user equipment UE is located, wherein
the first information indicates a synchronization signal/physical broadcast channel block SSB and/or system information SIB1 that are/is sent on at least one secondary cell SCell in which a secondary carrier of the UE is located are/is signals/a signal periodically sent by the network device or signals/a signal sent by the network device based on a request of the UE.

38. The method according to claim 37, wherein
corresponding to the SSB being the signal sent by the network device based on the request of the UE, receiving a first wake-up signal sent by the UE on the at least one SCell, and sending the SSB on the SCell based on the first wake-up signal;
corresponding to the SIB1 being the signal sent by the network device based on the request of the UE, receiving a second wake-up signal sent by the UE on the at least one SCell, and sending the SIB1 on the at least one SCell based on the second wake-up signal; or
corresponding to both the SSB and the SIB1 being the signals sent by the network device based on the request of the UE, receiving a third wake-up signal sent by the UE on the at least one SCell, and sending the SSB and the SIB1 on the at least one SCell based on the third wake-up signal.

39. The method according to claim 37 or 38, wherein the first signal is a system message SIB1 or another system message SIB that is broadcast and sent via the PCell.

40. The method according to claim 39, wherein the first signal comprises first domain information; and
a value of the first domain information is a seventh parameter value, and the SIB1 is the signal sent by the network device based on the request of the UE;
or
a value of the first domain information is an eighth parameter value, and the SIB1 is the signal periodically sent by the network device.

41. The method according to claim 40, wherein
the SIB comprises second domain information, and the SIB1 is the signal sent by the network device based on the request of the UE;
or
the SIB does not comprise the second domain information, and the SIB1 is the signal periodically sent by the network device.

42. The method according to claim 37 or 38, wherein the first signal is dedicated signaling sent by the PCell of the UE in a connected state.

43. The method according to claim 42, wherein the dedicated signaling is radio resource control RRC signaling.

44. The method according to claim 43, wherein the RRC signaling comprises a first information element IE; and
a value of the first IE is a ninth parameter value, and the SIB1 is the signal sent by the network device based on the request of the UE;
or
a value of the first IE is a tenth parameter value, and the SIB1 is the signal periodically sent by the network device.

45. The method according to claim 43, wherein
the RRC signaling comprises a second information element IE, and the SIB1 is the signal sent by the network device based on the request of the UE;
or
the RRC signaling does not comprise the second IE, and the SIB1 is the signal periodically sent by the network device.

46. A communication method, applied to a network device, wherein the method comprises:
sending a second reference signal, wherein the second reference signal is used for synchronization between the user equipment and the network device; and corresponding to the second reference signal being a discovery reference signal DRS signal or a low power synchronization signal LP-SS, a synchronization signal/physical broadcast channel block SSB and/or a system message SIB1 sent by the network device are/is signals/a signal sent by the network device based on a request of the user equipment UE.

47. The method according to claim 46, wherein the method further comprises:
corresponding to the SSB being the signal sent by the network device based on the request of the UE, receiving a first wake-up signal sent by the UE, and sending the SSB based on the first wake-up signal;
corresponding to the SIB1 being the signal sent by the network device based on the request of the UE, sending a second wake-up signal to the network device, and receiving the SIB1 sent by the network device based on the second wake-up signal; or
corresponding to the SSB and the SIB1 being the signals sent by the network device based on the request of the UE, sending a third wake-up signal to the network device, receiving the SSB and the SIB1 sent by the network device based on the third wake-up signal.

48. The method according to claim 46 or 47, wherein the DRS comprises a primary synchronization signal PSS and a secondary synchronization signal SSS.

49. A user equipment UE, comprising:
a transceiver, configured to perform a receiving operation and a sending operation in the method according to any one of claims 1 to 24; and
a processor, configured to perform an operation other than the receiving operation and the sending operation in the method according to any one of claims 1 to 24.

50. A network device, comprising:
a transceiver, configured to perform a receiving operation and a sending operation in the method according to any one of claims 25 to 48; and
a processor, configured to perform an operation other than the receiving operation and the sending operation in the method according to any one of claims 25 to 48.

51. A communication system, comprising a user equipment UE and a network element, wherein the UE is configured to perform the method according to any one of claims 1 to 24, and the network element is configured to perform the method according to any one of claims 25 to 48.

52. A computer storage medium, configured to store a computer program, wherein when the computer program is executed, the communication method according to any one of claims 1 to 48 is implemented.
